# EUROPEAN PATENT SPECIFICATION

(11) **EP 3 723 977 B1**
(45) Date of publication and mention of the grant of the patent: **26.01.2022**
(21) Application number: 18842461.8
(22) Date of filing: 07.12.2018
(51) Int. Cl.: B32B 7/06, B32B 7/12, B32B 27/08, B32B 27/16, B32B 27/26, B32B 27/30, B32B 27/36, B32B 27/40, B32B 3/26, B32B 3/02, C09D 175/16, C08F 290/14, C08G 18/24, C08G 18/67, C08G 18/78, C08G 18/79, C08K 3/08

(54) **COMPOSITE FILM, PROTECTIVE COVER FOR AN ELECTRONIC DEVICE, AND METHODS OF MAKING THE SAME**
VERBUNDFOLIE, SCHUTZABDECKUNG FÜR ELEKTRONISCHE VORRICHTUNG, UND VERFAHREN ZU IHRER HERSTELLUNG
FILM COMPOSITE, COUVERCLE DE PROTECTION POUR DISPOSITIF ÉLECTRONIQUE, ET PROCÉDÉS POUR LES PRÉPARER

(30) Priority: 12.12.2017 US 201762597524 P
(43) Date of publication of application: 21.10.2020
(73) Proprietor: 3M Innovative Properties Company, St. Paul, MN 55133-3427 (US)
(72) Inventor: KLUN, Thomas P., Saint Paul, MN 55133-3427 (US); ZHANG, Chunjie, Saint Paul, MN 55133-3427 (US); POKORNY, Richard J., Saint Paul, MN 55133-3427 (US); COONCE, Benjamin R., Saint Paul, MN 55133-3427 (US); SONNEK, Benjamin G., Saint Paul, MN 55133-3427 (US); AMBUR, Gregg A., Saint Paul, MN 55133-3427 (US); WU, Jung-Sheng, Saint Paul, MN 55133-3427 (US)
(74) Representative: Mathys & Squire
(86) International application number: PCT/IB2018/059776
(87) International publication number: WO 2019/116188

(56) References cited:
- WO-A1-2017/136382
- CN-U- 201 566 187
- CN-U- 201 566 190
- JP-A- 2013 111 929
- JP-A- 2015 016 679
- US-A1- 2009 000 727
- US-A1- 2012 276 373

## Description

### TECHNICAL FIELD

The present disclosure broadly relates to covers for electronic devices, and methods of making the same.

### BACKGROUND

Covers for electronic devices, including transparent thermoformed covers for electronic displays, are prone to surface damage such as gouging and scuffing that may occur during handling and use. Such damage can detract from performance and/or aesthetic appearance of the electronic device.

Patent application US 2012276373 relates to film composites with a single coating of hard coat material. This film composite may be comprised of a transparent base sheet having on one side thereof a weather resistant hard coat comprised of: at least one multifunctional acrylate monomer or oligomer; a dual-curable resin comprising an aliphatic urethane acrylate resin having isocyanate functional groups and an aliphatic urethane acrylate having hydroxyl functional groups; an ultraviolet (UV) stabilizer; and a photoinitiator.

Patent application JP2015016679 relates to a method for producing a formed body, in which the formed body is obtained by bending a resin plate by thermoforming such as press forming, vacuum forming and pneumatic forming.

Patent application JP 2013111929 discloses a film for lamination.

### SUMMARY

It would be desirable to have materials and methods for protecting covers for electronic devices from physical damage such as, for example, gouging and/or scuffing. It would further be desirable that such materials and methods would be amenable to shaping and post-forming processes used to incorporate them into various articles.

In an aspect of the invention, the present disclosure provides a protective cover for an electronic device, the protective cover comprising:
a first unitary thermoplastic polymer film having first and second opposed major surfaces;
a low surface energy abrasion resistant layer disposed on the first major surface of the first unitary thermoplastic polymer film, wherein the low surface energy abrasion resistant layer comprises an at least partially cured curable composition, the curable composition comprising components:
   a) 70 to 95 weight percent of urethane (meth)acrylate compound having an average (meth)acrylate functionality of 3 to 9, based on the total weight of components a) to d);
   b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
   c) 0.5 to 2 weight percent of silicone (meth)acrylate, based on the total weight of components a) to d); and
   d) optional effective amount of photoinitiator;
a first adhesive layer proximate and securely bonded to the second major surface of the first unitary thermoplastic polymer film,
wherein the protective cover comprises a central planar section having first and second opposed major surfaces, wherein the central planar section is bounded by at least two linear side sections, wherein the at least two linear side sections extend out of plane from the central planar section to define inner and outer surfaces of the protective cover, and wherein the low surface energy abrasion resistant layer is disposed on the outer surface of the central planar section.

In yet another aspect of the invention, the present disclosure provides a method of making a protective cover for an electronic device, the method comprising:
thermoforming a composite film to provide a protective cover comprising a central planar section having first and second opposed major surfaces, wherein the central planar section is bounded by at least two linear side sections, and wherein the composite film comprises:
   a first unitary thermoplastic polymer film having first and second opposed major surfaces;
   a low surface energy abrasion resistant layer disposed on the first major surface of the first unitary thermoplastic polymer film, wherein the low surface energy abrasion resistant layer comprises an at least partially cured curable composition, the curable composition comprising components:
      a) 70 to 95 weight percent of urethane (meth)acrylate compound having an average (meth)acrylate functionality of 3 to 9, based on the total weight of components a) to d);
      b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
      c) 0.5 to 2 weight percent of silicone (meth)acrylate, based on the total weight of components a) to d); and
      d) optional effective amount of photoinitiator; and
a first adhesive layer proximate and securely bonded to the second major surface of the first unitary thermoplastic polymer film,
wherein the at least two linear side sections extend out of plane from the central planar section to define inner and outer surfaces of the protective cover, and wherein the low surface energy abrasion resistant layer is disposed on at least a portion of the outer surface.

As used herein:
The term "carbamylene" refers to the divalent group 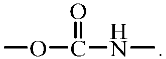
The prefix "(meth)acryl" refers to methacryl and/or acryl;
"transparent" means having the property of transmitting rays of light through its substance so that bodies situated beyond or behind can be distinctly seen by an unaided human eye; and
"urethane (meth)acrylate compound" means a compound having at least one (preferably at least 2, 3, 4, or more) carbamylene group (i.e., -NHC(=O)O-) and at least one (meth)acryl group.

Features and advantages of the present disclosure will be further understood upon consideration of the detailed description as well as the appended claims.

### BRIEF DESCRIPTION OF THE DRAWINGS

FIG. 1 is a schematic side view of exemplary composite film 100.
FIG. 2 is an exploded perspective view of exemplary protective cover 200 of the invention disposed on an electronic device.
FIG. 3 is a schematic end view of exemplary protective cover 300 of the invention.
FIG. 4 is a schematic end view of exemplary protective cover 400 of the invention.

Repeated use of reference characters in the specification and drawings is intended to represent the same or analogous features or elements of the disclosure. It should be understood that numerous other modifications and embodiments can be devised by those skilled in the art, which fall within the scope of the claims of the disclosure. The figures may not be drawn to scale.

### DETAILED DESCRIPTION

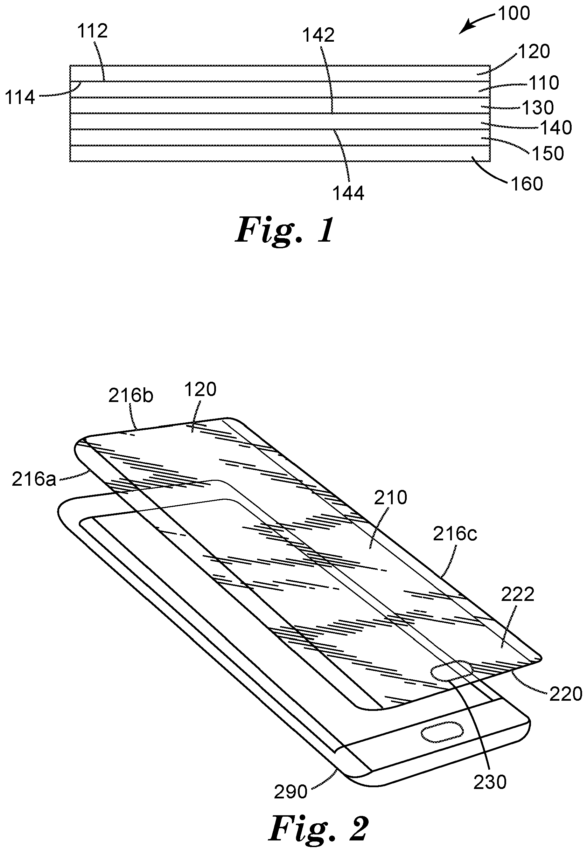

Composite films disclosed in the present disclosure include various components. Referring now to FIG. 1, composite film 100 includes a first unitary thermoplastic polymer film 110 having first and second opposed major surfaces (112, 114). Low surface energy abrasion resistant layer 120 is disposed on first major surface 112. Low surface energy abrasion resistant layer 120 comprises an at least partially cured curable composition.

First adhesive layer 130 is proximate and securely bonded to second major surface 114. Second unitary thermoplastic polymer film 140 has two opposed major surfaces (142, 144) and is securely bonded to first adhesive layer 130. Second adhesive layer 150 is proximate and securely bonded to second unitary thermoplastic polymer film 140 opposite first adhesive layer 130. Optional releasable liner 160 is releasably adhered to the second adhesive layer.

Composite films disclosed in the present disclosure and related subassemblies thereof may be useful for making protective covers according to the invention for electronic devices

Referring now to FIG. 2, protective cover 200 includes comprises a central planar section 210 having first and second opposed major surfaces (212, 214). Central planar section 210 is bounded by linear side sections (216a, 216b, 216c). Linear side sections (216a, 216b, 216c) extend out of plane from central planar section 210 to define inner and outer surfaces 220, 222 of protective cover 200 such that low surface energy abrasion resistant layer 120 is disposed on outer surface 220 of central planar section 210. Optional opening 230 in protective cover 200 extends through the cover to permit a user to access an operational control feature of electronic device 290 (shown as a cell phone).

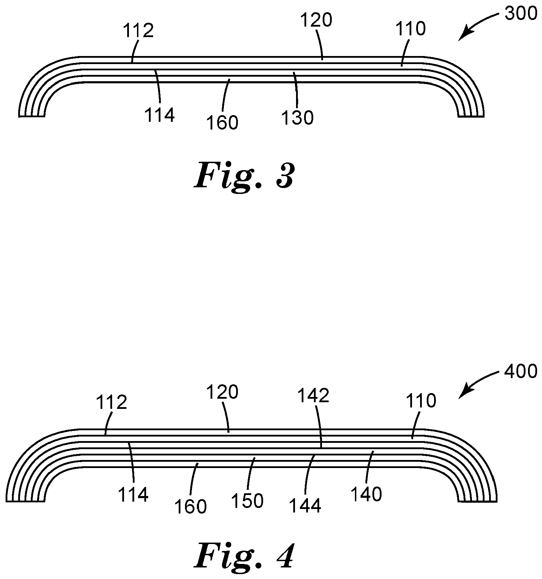

Two embodiments of a thermoformed protective cover are shown in FIGS. 3 and 4, respectively. Referring now to FIG. 3, exemplary protective cover 300 includes a first unitary thermoplastic polymer film 110 having first and second opposed major surfaces (112, 114). Low surface energy abrasion resistant layer 120 is disposed on first major surface 112 of first unitary thermoplastic polymer film 110. First adhesive layer 130 is proximate and securely bonded to second major surface 114 of first unitary thermoplastic polymer film 110. Optional releasable liner 160 is releasably adhered to first adhesive layer 130.

Referring now to FIG. 4, exemplary protective cover 400 includes a first unitary thermoplastic polymer film 110 having first and second opposed major surfaces (112, 114). Low surface energy abrasion resistant layer 120 is disposed on first major surface 112 of first unitary thermoplastic polymer film 110. First adhesive layer 130 is proximate and securely bonded to second major surface 114 of first unitary thermoplastic polymer film 110. Second unitary thermoplastic polymer film 140 has two opposed major surfaces (142, 144) and is proximate and securely bonded to the first adhesive layer 130. Second adhesive layer 150 is proximate and securely bonded to second unitary thermoplastic polymer film 140 opposite first adhesive layer 130. Optional releasable liner 160 is releasably adhered to second adhesive layer 150.

Curable compositions that may be at least partially cured to provide the low surface energy abrasion resistant layer comprise, based on the total weight of components a) to d):
a) 70 to 95 weight percent of urethane (meth)acrylate compound (i.e., one or more urethane (meth)acrylate compounds) having an average (meth)acrylate functionality of 3 to 9, preferably 3 to 7, and more preferably 3 to 6;
b) 2 to 20 weight percent (meth)acrylate monomer (i.e., one or more (meth)acrylates) having a (meth)acrylate functionality of 1 to 2, preferably 2;
c) 0.5 to 2 weight percent of silicone (meth)acrylate (i.e., one or more silicone (meth)acrylates), preferably having 1 or 2 (meth)acrylate groups per silicone (meth)acrylate molecule;
d) optional effective amount of photoinitiator (i.e., one or more photoinitiators), preferably 1 to 3 photoinitiators;
e) optional solvent (i.e., one or more solvents), preferably organic solvent; and
f) optional alpha alumina particles having a Dv50 of from 0.1 to 1 micron.

The urethane (meth)acrylate compound contributes to the conformability and flexibility of the cured composition, and hence its suitability for thermoforming. Exemplary urethane (meth)acrylate compounds having an average (meth)acrylate functionality of 3 to 9 are available from commercial sources, and/or can be prepared according to known methods.

Commercially available urethane (meth)acrylate compounds include EBECRYL 264 aliphatic urethane triacrylate, EBECRYL 265 aliphatic urethane triacrylate, EBECRYL 1258 aliphatic urethane triacrylate, EBECRYL 4100 aliphatic urethane triacrylate, EBECRYL 4101 aliphatic urethane triacrylate, EBECRYL 8412 aliphatic urethane acrylate (trifunctional), EBECRYL 4654 aliphatic urethane triacrylate, EBECRYL 4666 aliphatic urethane triacrylate, EBECRYL 4738 aliphatic allophanate urethane triacrylate, EBECRYL 4740 aliphatic allophanate urethane triacrylate, EBECRYL 8405 aliphatic urethane tetraacrylate, EBECRYL 8604 aliphatic urethane tetraacrylate, EBECRYL 4500 aromatic urethane tetraacrylate, EBECRYL 4501 aromatic urethane tetraacrylate, EBECRYL 4200 aliphatic urethane tetraacrylate, EBECRYL 4201 aliphatic urethane tetraacrylate, EBECRYL 8702 aliphatic urethane hexaacrylate, EBECRYL 220 aromatic urethane hexaacrylate, EBECRYL 221 aromatic urethane hexaacrylate, EBECRYL 2221 aromatic urethane hexaacrylate, EBECRYL 2221 aromatic urethane hexaacrylate, EBECRYL 5129 aliphatic urethane hexaacrylate, EBECRYL 1290 aliphatic urethane hexaacrylate, EBECRYL 1291 aliphatic urethane hexaacrylate, EBECRYL 8301-R aliphatic urethane hexaacrylate, EBECRYL 8602 aliphatic urethane acrylate (nonafunctional), all from Allnex, Brussells, Belgium; and CN929 trifunctional urethane acrylate and CN9006 aliphatic urethane acrylate (hexafunctional) from Sartomer Co., Exton, Pennsylvania.

In some embodiments, the urethane (meth)acrylate compound can be synthesized by reacting a polyisocyanate compound with a hydroxyl-functional (meth)acrylate compound. A variety of polyisocyanates may be utilized in preparing the urethane (meth)acrylate compound. As used herein, the term "polyisocyanate" means any organic compound that has two or more reactive isocyanate (-NCO) groups in a single molecule such as, for example, diisocyanates, triisocyanates, tetraisocyanates, and mixtures thereof. For improved weathering and diminished yellowing the, urethane (meth)acrylate compound(s) employed herein are preferably aliphatic and therefore derived from an aliphatic polyisocyanate.

The urethane (meth)acrylate compound is preferably a reaction product of hexamethylene diisocyanate (HDI), such as available from Covestro LLC, Pittsburgh, Pennsylvania as DESMODUR H, or a derivative thereof. These derivatives include, for example, polyisocyanates containing biuret groups, such as the biuret adduct of hexamethylene diisocyanate (HDI) available from Covestro LLC as DESMODUR N-100, polyisocyanates containing one or more isocyanurate rings 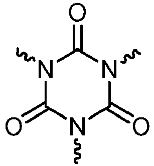 such as that available from Covestro LLC as DESMODUR N-3300, as well as polyisocyanates containing urethane groups, uretdione groups, carbodiimide groups, and/or allophanate groups. Yet another useful derivative, is a hexamethylene diisocyanate (HDI) trimer, available from Covestro LLC as DESMODUR N-3800. These derivatives are preferred as they are polymeric, exhibit very low vapor pressures and are substantially free of isocyanate monomer.

In some embodiments, the urethane (meth)acrylate compound is the reaction product of a polyisocyanate such as a hexamethylene diisocyanate (HDI) derivative having an -NCO (i.e., isocyanate group) content of at least 10 percent, at least 15 percent, or even at least 20 weight percent. In some cases, HDI or other polyisocyanate may be reacted with hydroxyl-functional (meth)acrylate compounds and polyols. The -NCO content of the polyisocyanate is preferably not greater than 50 weight percent. On some embodiments, the polyisocyanate typically has an equivalent weight of at least 80, 100, 120, 140, 160, 180, or even 200 grams/per -NCO group. The equivalent weight is typically no greater than 500, 450, or 400 grams/per -NCO group and in some embodiments no greater than 350, 300, or 250 grams/per -NCO group, although this is not a requirement.

When aliphatic polyisocyanates comprising a cyclic group such as an isophorone diisocyanate (IPDI) derivative are used, the resulting cured composition can be less flexible (e.g., have poor thermoformability) and poor abrasion resistance.

The polyisocyanate is reacted with a hydroxyl-functional acrylate compound having the formula HOQ(A)ₚ; wherein Q is a divalent organic linking group, A is a (meth)acryl functional group - XC(=O)C(R₂)=CH₂ wherein X is O, S, or NR wherein R is H or C₁-C₄ alkyl, R₂ is a lower alkyl of 1 to 4 carbon atoms or H; and p is 1 to 6. The -OH group reacts with the isocyanate group forming a urethane linkage.

In some embodiments, the polyisocyanate can be reacted with a diol acrylate, such as a compound of the formula HOQ(A)Q₁Q(A)OH, wherein Q₁ is a divalent linking group and A is a (meth)acryl functional group as previously described. Representative compounds include hydantoin hexaacrylate (HHA) (e.g., see Example 1 of U. S. Pat. No. 4,262,072 (Wendling et al.), and H₂CH=C(CH₃)C(=O)OCH₂CH(OH)CH₂O(CH₂)₄OCH₂CH(OH)CH₂OC(=O)C(CH₃)=CH₂.

Q and Q₁ are independently a straight or branched chain or cycle-containing connecting group. Q can, for example, include a covalent bond, alkylene, arylene, aralkylene, or alkarylene. Q can optionally include heteroatoms such as O, N, and S, and combinations thereof. Q can also optionally include a heteroatom-containing functional group such as carbonyl or sulfonyl, and combinations thereof. In one embodiment, the hydroxyl-functional acrylate compounds used to prepare the urethane (meth)acrylate compound are monofunctional, such as in the case of hydroxyethyl acrylate, hydroxybutyl acrylate, and caprolactone monoacrylate, available as SR-495 from Sartomer Co. In this embodiment, p is 1.

In another embodiment, the hydroxyl-functional acrylate compounds used to prepare the urethane (meth)acrylate compound are multifunctional, such as the in the case of glycerol dimethacrylate, 1-(acryloxy)-3-(methacryloxy)-2-propanol, pentaerythritol triacrylate. In this embodiment, p is at least 2, at least 3, at least 4, at least 5, or at least 6.

In some embodiments, only monofunctional hydroxyl-functional acrylate compounds are utilized in the preparation of the urethane (meth)acrylate compound. In other embodiments, a combination of monofunctional and multifunctional hydroxyl-functional acrylate compounds are utilized in the preparation of the urethane (meth)acrylate compound. In some embodiments, the weight ratio of monofunctional hydroxyl-functional acrylate compound(s) to multifunctional hydroxyl-functional acrylate compound(s) ranges from 0.5:1 to 1:0.5. When the urethane (meth)acrylate compound is prepared from only multifunctional hydroxyl-functional acrylate compound(s), in some embodiments the resulting cured composition can be less flexible.

The average (meth)acrylate functionality is calculated in the following fashion. The functionality of the added acrylates for each compound is first calculated. For instance, the PE3 below is designated as 1.0 DESN100 + 0.25 HEA + 0.75 PET3A. This means that the compound is the reaction product of 1 equivalent of isocyanate groups (as DESN100) and 0.25 hydroxyl equivalents of hydroxyethyl acrylate and 0.75 hydroxyl equivalents of PET3A. The HEA has 1 acrylate group per hydroxyl group and the PET3A has 3 acrylate groups per hydroxyl group. The functionality of added acrylates for this compound is then (0.25^{∗}1)+(0.75^{∗}3) or 2.5. The average (meth)acrylate functionality is found by multiplying the functionality of the added acrylates for each compound by the average functionality of the polyisocyanate. According to Covestro, the average functionality for DESN100 is 3.6, so the average (meth)acrylate functionality for the compound is at 2.5^{∗}3.6 or 9.

Other estimated average functionality of polyisocyanates for DESN3300, DESN3800, and DESZ4470BA are 3.5, 3.0, and 3.3 respectively.

In some embodiments, some of the isocyanate groups on the polyisocyanate can be reacted with a polyol such as, for example, an alkoxylated polyol available from Perstorp Holding AB, Sweden as Polyol 4800. Such polyols can have a hydroxyl number of 500 to 1000 mg KOH/g and a molecular weight ranging from at least 200 or 250 g/mole up to 500 g/mole.

In some embodiments, some of the isocyanate groups on the polyisocyanate can be reacted with a polyol such as 1,6-hexanediol.

Selection of reaction conditions used to react the polyisocyanate with (meth)acrylated alcohols, and choice of catalyst if any, will be apparent to those of skill in the art. Further examples can be found in the Examples section hereinbelow.

Useful (meth)acrylate monomers (which are preferably non-urethane, and preferably non-silicone, although this is not a requirement) have a (meth)acrylate functionality of 1 to 2. These monomers may function as diluents or solvents, as viscosity reducers, as binders when cured, and as crosslinking agents, for example. Examples of useful (meth)acrylates include mono(meth)acrylates such as octyl (meth)acrylate, nonylphenol ethoxylate (meth)acrylate, isononyl (meth)acrylate, isobornyl (meth)acrylate, 2-(2-ethoxyethoxy)ethyl (meth)acrylate, 2-ethylhexyl (meth)acrylate, lauryl (meth)acrylate, beta-carboxyethyl (meth)acrylate, isobutyl (meth)acrylate, 2-hydroxyethyl (meth)acrylate, isodecyl (meth)acrylate, dodecyl(meth)acrylate, n-butyl (meth)acrylate, methyl (meth)acrylate, hexyl (meth)acrylate, (meth)acrylic acid, stearyl (meth)acrylate, hydroxy functional caprolactone ester (meth)acrylate, isooctyl (meth)acrylate, hydroxymethyl (meth)acrylate, hydroxypropyl (meth)acrylate, hydroxyisopropyl (meth)acrylate, hydroxybutyl(meth)acrylate, hydroxyisobutyl (meth)acrylate, tetrahydrofurfuryl (meth)acrylate, and alkoxylated versions of the above (meth(acrylate monomers, such as alkoxylated tetrahydrofurfuryl (meth)acrylate and combinations thereof. Tetrahydrofurfuryl (meth)acrylate is preferred in some embodiments ; di(meth)acrylates such as 1,6-hexanediol di(meth)acrylate, poly(ethylene glycol) di(meth)acrylates, polybutadiene di(meth)acrylates, polyurethane di(meth)acrylates, ethylene glycol di(meth)acrylate, diethylene glycol di(meth)acrylate, triethylene glycol di(meth)acrylate, tetraethylene glycol di(meth)acrylate, neopentyl glycol di(meth)acrylate, alkoxylated versions of the above di(meth)acrylates, and combinations thereof. Of these, 1,6-hexanediol diacrylate is preferred n some embodiments. (Meth)acrylate monomers having a functionality of 1 or 2 (e.g., as listed above) are widely commercially available.

Exemplary useful silicone (meth)acrylates include mono- and polyfunctional silicone (meth)acrylates. Of these, silicone poly(meth)acrylates may be preferred because the likelihood of unbound silicone (meth)acrylate after curing is generally reduced. Exemplary silicone (meth)acrylates include EBECRYL 350 silicone diacrylate and EBECRYL 1360 silicone hexaacrylate from Allnex, CN9800 aliphatic silicone acrylate and CN990 siliconized urethane acrylate compound from Sartomer Co., and TEGO RAD 2100, TEGO RAD 2250, and TEGO RAD 2500 silicone polyether acrylate from Evonik Industries, Parsippany, New Jersey.

The curable composition may optionally, but preferably, further comprise an effective amount of photoinitiator. By the term "effective amount" is meant an amount that is at least sufficient amount to cause curing of the curable composition under ambient conditions. It will be recognized that curing may be complete even though polymerizable (meth)acrylate groups remain.

Exemplary photoinitiators include α-cleavage photoinitiators such as benzoin and its derivatives such as α-methylbenzoin; α-phenylbenzoin; α-allylbenzoin; α-benzylbenzoin; benzoin ethers such as benzil dimethyl ketal (available as IRGACURE 651 from Ciba Specialty Chemicals, Tarrytown, New York), benzoin methyl ether, benzoin ethyl ether, benzoin n-butyl ether; acetophenone and its derivatives such as 2-hydroxy-2-methyl-1-phenyl-1-propanone (available as DAROCUR 1173 from Ciba Specialty Chemicals) and 1-hydroxycyclohexyl phenyl ketone (available as IRGACURE 184 from Ciba Specialty Chemicals); 2-methyl-1-[4-(methylthio)phenyl]-2-(4-morpholnyl)-1-propanone (available as IRGACURE 907 from Ciba Specialty Chemicals); 2-benzyl-2-(dimethylamino)-1-[4-(4-moipholinyl)phenyl]-1-butanone (available as IRGACURE 369 from Ciba Specialty Chemicals); titanium complexes such as bis(η5-2,4-cyclopentadien-1-yl)bis[2,6-difluoro-3-(1H-pyrrol-1-yl)phenyl]titanium (available as CGI 784 DC from Ciba Specialty Chemicals); and mono- and bis-acylphosphines (available from Ciba Specialty Chemicals as IRGACURE 1700, IRGACURE 1800, IRGACURE 1850, and DAROCUR 4265). One useful photoinitiator, a difunctional alpha hydroxyketone, is available as ESACURE ONE from Lamberti S.p.A, Albizzate, Italy.

Desirably, if an acylphosphine or acylphosphine oxide photoinitiator is utilized, it is combined with a photoinitiator (e.g., 2-hydroxy-2-methyl-1-phenyl-1-propanone) having a high extinction coefficient at one or more wavelengths of the actinic radiation. Such combination typically facilitates surface cure while maintaining low levels of costly photoinitiator.

Other useful photoinitiators include: anthraquinones (e.g., anthraquinone, 2-ethylanthraquinone, 1-chloroanthraquinone, 1,4-dimethylanthraquinone, 1-methoxyanthraquinone) and benzophenone and its derivatives (e.g., phenoxybenzophenone, phenylbenzophenone).

The curable composition may contain optional solvent, generally organic solvent, although water/solvent blends may be used. Exemplary optional solvents include hydrocarbons or halogenated hydrocarbons (e.g., toluene, cyclohexane, petroleum ether, lower alcohols (e.g., methanol, ethanol, propanol, and isopropanol), esters of aliphatic acids (e.g., ethyl acetate), ethers (e.g., tetrahydrofuran), and ketones (e.g., acetone and methyl ethyl ketone). The solvents can be used singly or in admixture. One skilled in the art can readily determine which solvent to use, and its amount.

The curable composition may contain alpha alumina particles having a particle size distribution with a Dv50 of from 0.15 to 1 micron. If present, the curable composition preferably contains from 0.2 to 9 weight percent (preferably 0.2 to 3 weight percent) of alpha alumina particles based on the total weight of components a) and b). In some preferred embodiments, the alpha alumina particles have a particle size distribution with a Dv50 of from 0.2 to 0.3 micron. In some preferred embodiments, the alpha alumina particles have a polymodal distribution.

The alpha alumina particles comprise, preferably consist essentially of (e.g., are at least 99 weight percent), or even consist of, alumina in its alpha crystalline form. In some preferred embodiments, the alpha alumina particles have a particle size distribution with a Dv50 of greater than or equal to 0.21, 0.23, 0.25, 0.30, 0.40, or even 0.50 micron. In some preferred embodiments, the curable composition and the polymer composition may contain less than 8, 7, 6, 5, 4, 3, or even less than 2 weight percent of alpha alumina particles having a particle size distribution with a Dv50 of from 0.2 to 0.3 micron, based on the total weight of components a) and b).

The alpha alumina particles can be made by milling larger size alpha alumina, for example, using a ball mill or a jet mill. If using a ball mill the milling media preferably comprises, or even consists of, alpha alumina, although other milling media such as, for example, aluminum zirconate media may be used.

Alpha alumina particles, which may even be in the size range of having particle size distribution with a Dv50 of from 0.15 to 1 micron, can be readily obtained from commercial sources. Suppliers include US Research Nanomaterials, Inc., Houston, Texas; Sisco Research Laboratories Pvt. Ltd., Mumbai, India; and Baikowski International Corp., Charlotte, North Carolina.

The curable composition may also contain one or more optional additional additives such as, for example, fillers, thickeners, tougheners, pigments, fibers, tackifiers, lubricants, wetting agents, surfactants, antifoaming agents, dyes, coupling agents, plasticizers, and suspending agents.

The first and second unitary thermoplastic films (which are preferably optically transparent although this is not a requirement) each independently comprise one or more thermoplastic polymers. The unitary thermoplastic films may be in sheet form or continuous (e.g., a web), and may have any thickness suitable for thermoforming. In some embodiments, one or both of the first and second unitary thermoplastic film has a thickness of from 25 microns to 3 mm, although this is not a requirement.

Useful thermoplastic polymers include, for example, polylactones (e.g., poly(pivalolactone) and poly(caprolactone)); polyurethanes (e.g., those derived from reaction of diisocyanates such as 1,5-naphthalene diisocyanate, p-phenylene diisocyanate, m-phenylene diisocyanate, 2,4-toluene diisocyanate, 4,4'-diphenylmethane diisocyanate, 3,3'-dimethyl-4,4'-diphenylmethane diisocyanate, 3,3'-dimethyl-4,4'-biphenyl diisocyanate, 4,4'-diphenylisopropylidene diisocyanate, 3,3'-dimethyl-4,4'-diphenyl diisocyanate, 3,3'-dimethyl-4,4'-diphenylmethane diisocyanate, 3,3'-dimethoxy-4,4'-biphenyl diisocyanate, dianisidine diisocyanate, toluidine diisocyanate, hexamethylene diisocyanate, or 4,4'-diisocyanatodiphenylmethane with linear long-chain diols such as poly(tetramethylene adipate), poly(ethylene adipate), poly(1,4-butylene adipate), poly(ethylene succinate), poly(2,3-butylenesuccinate), polyether diols); polycarbonates (e.g., poly(methane bis(4-phenyl) carbonate), poly(1,1-ether bis(4-phenyl)carbonate), poly(diphenylmethane bis(4-phenyl)carbonate), poly(1,1-cyclohexane bis(4-phenyl) carbonate), or poly(2,2-(bis4-hydroxyphenyl)propane) carbonate); polysulfones; polyether ether ketones; polyamides (e.g., poly(4-aminobutyric acid), poly(hexamethylene adipamide), poly(6-aminohexanoic acid), poly(m-xylylene adipamide), poly(p-xylylene sebacamide), poly(m-phenylene isophthalamide), and poly(p-phenylene terephthalamide)); polyesters (e.g., poly(ethylene azelate), poly(ethylene-1,5-naphthalate), poly(ethylene-2,6-naphthalate), poly(1,4-cyclohexane dimethylene terephthalate), poly(ethylene oxybenzoate), poly(para-hydroxy benzoate), poly(1,4-cyclohexylidene dimethylene terephthalate)(cis), poly(1,4-cyclohexylidene dimethylene terephthalate)(trans), polyethylene terephthalate, and polybutylene terephthalate); poly(arylene oxides) (e.g., poly(2,6-dimethyl-1,4-phenylene oxide) and poly(2,6-diphenyl-1,1-phenylene oxide)); polyetherimides; vinyl polymers and their copolymers (e.g., polyvinyl acetate, polyvinyl alcohol, polyvinyl chloride, polyvinyl butyral, polyvinylidene chloride, and ethylene-vinyl acetate copolymers); acrylic polymers (e.g., poly(ethyl acrylate), poly(n-butyl acrylate), poly(methyl methacrylate), poly(ethyl methacrylate), poly(n-butyl methacrylate), poly(n-propyl methacrylate), polyacrylamide, polyacrylonitrile, ethylene-ethyl acrylate copolymers, and ethylene-acrylic acid copolymers, poly(acrylonitrile-co-butadiene-co-styrene) and poly(styrene-co-acrylonitrile)); styrenic polymers (e.g., polystyrene, poly(styrene-co-maleic anhydride) polymers and their derivatives, methyl methacrylate-styrene copolymers, and methacrylated butadienestyrene copolymers); polyolefins (e.g., polyethylene, polybutylene, polypropylene, chlorinated low density polyethylene, poly(4-methyl-1-pentene)); cellulose ester plastics (e.g., cellulose acetate, cellulose acetate butyrate, and cellulose propionate); polyarylene ethers (e.g., polyphenylene oxide); polyimides; polyvinylidene halides; aromatic polyketones; and polyacetals. Copolymers and/or combinations of these aforementioned polymers can also be used. Of these polycarbonates are typically preferred.

The curable composition may be coated onto a major surface of the first unitary polymer film by any suitable technique including, for example, spray coating, roll coating, gravure coating, slot coating, knife coating, bar coating, and dip coating. If optional solvent is present, it is typically at least substantially removed at this point (e.g., using a forced air oven or other heating means).

Next, the optionally at least partially dried, curable composition is at least partially cured, preferably fully cured to provide a, typically thermoformable, composite film. Curing may be accomplished using heat if the curable composition comprises a thermal initiator (e.g., a peroxide initiator), particulate radiation (e.g., e-beam), or photocuring (e.g., using ultraviolet and/or visible wavelengths of electromagnetic radiation). Techniques for such curing technologies are well-known in the art and are within the capability of the skilled artisan.

Subsequent layers of adhesive(s), optional second unitary polymer film, and optional release liner may be added using techniques known to those of skill in the art such as, for example, by lamination. Lamination can be accomplished by heating and/or pressure, more preferably using the first and option second adhesive layers. Preferably the adhesive layer are pressure-sensitive and/or hot melt adhesives. Exemplary pressure-sensitive adhesives include latex crepe, rosin, acrylic polymers, and copolymers including polyacrylate esters (e.g., poly(butyl acrylate)), vinyl ethers (e.g., poly(vinyl n-butyl ether)), alkyd adhesives, rubber adhesives (e.g., natural rubber, synthetic rubber, chlorinated rubber), and mixtures thereof. Exemplary hot melt adhesive include styrene-butadiene block copolymers; for example, as available under the trade designation KRATON from Kraton Corporation, Houston,TX.

Thermoforming is a manufacturing process whereby the plastic film is heated to a pliable forming temperature, formed to a specific shape in a mold, and trimmed to create a usable product. The film is typically heated in an oven to a high-enough temperature that permits it to be stretched into or onto a mold and cooled to a finished shape. Its simplified version is vacuum forming. Suitable thermoforming techniques are well known to those of skill in the art. Protective films according to the present disclosure may be assessed for their thermoformability by thermoforming them in a mold (e.g., having right angle surfaces) and determining the amount of cracking of the cured composition from the edges of the molded shape to the center of the thermoformed shape. Preferred embodiments exhibit no cracking anywhere on the thermoformed shape. If the coating on the thermoformed shape cracks, the crack usually starts on the edge. For example, if a crack starts at the edge and continues 20% of the distance between the edge and the center of the thermoformed shape, then cracking is reported as 20% from the edge. Once a shape is thermoformed, typically there is no further cracking when that shape is used in further molding operations.

### SELECT EMBODIMENTS OF THE PRESENT DISCLOSURE

In a first embodiment (not part of the invention), the present disclosure provides a composite film comprising:
a first unitary thermoplastic polymer film having first and second opposed major surfaces;
a low surface energy abrasion resistant layer disposed on the first major surface of the first unitary thermoplastic polymer film, wherein the low surface energy abrasion resistant layer comprises an at least partially cured curable composition, the curable composition comprising components:
   a) 70 to 95 weight percent of urethane (meth)acrylate compound having an average (meth)acrylate functionality of 3 to 9, based on the total weight of components a) to d);
   b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
   c) 0.5 to 2 weight percent of silicone (meth)acrylate, based on the total weight of components a) to d); and
   d) optional effective amount of photoinitiator;
a first adhesive layer proximate and securely bonded to the second major surface of the first unitary thermoplastic polymer film;
a second unitary thermoplastic polymer film proximate having two opposed major surfaces and securely bonded to the first adhesive layer; and
a second adhesive layer proximate and securely bonded to the second unitary thermoplastic polymer film opposite the first adhesive layer.

In a second embodiment (not part of the invention), the present disclosure provides a composite film according to the first embodiment, further comprising a releasable liner releasably adhered to the second adhesive layer.

In a third embodiment (not part of the invention), the present disclosure provides a composite film according to the first or second embodiment, wherein the first and second adhesive layers are pressure-sensitive adhesive layers.

In a fourth embodiment of the invention, the present disclosure provides a protective cover for an electronic device, the protective cover comprising:
a first unitary thermoplastic polymer film having first and second opposed major surfaces;
a low surface energy abrasion resistant layer disposed on the first major surface of the first unitary thermoplastic polymer film, wherein the low surface energy abrasion resistant layer comprises an at least partially cured curable composition, the curable composition comprising components:
   a) 70 to 95 weight percent of urethane (meth)acrylate compound having an average (meth)acrylate functionality of 3 to 9, based on the total weight of components a) to d);
   b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
   c) 0.5 to 2 weight percent of silicone (meth)acrylate, based on the total weight of components a) to d); and
   d) optional effective amount of photoinitiator;
a first adhesive layer proximate and securely bonded to the second major surface of the first unitary thermoplastic polymer film,
wherein the protective cover comprises a central planar section having first and second opposed major surfaces, wherein the central planar section is bounded by at least two linear side sections, wherein the at least two linear side sections extend out of plane from the central planar section to define inner and outer surfaces of the protective cover, and wherein the low surface energy abrasion resistant layer is disposed on the outer surface of the central planar section.

In a fifth embodiment of the invention , the present disclosure provides a cover for an electronic device according to the fourth embodiment, further comprising a releasable liner releasably adhered to the first adhesive layer.

In a sixth embodiment of the invention, the present disclosure provides a cover for an electronic device according to the fourth embodiment, further comprising:
a second unitary thermoplastic polymer film having two opposed major surfaces, the second unitary thermoplastic polymer film being proximate and securely bonded to the first adhesive layer; and
a second adhesive layer proximate and securely bonded to the second unitary thermoplastic polymer film opposite the first adhesive layer.

In a seventh embodiment of the invention, the present disclosure provides a cover for an electronic device according to the sixth embodiment, further comprising a releasable liner releasably adhered to the second adhesive layer.

In an eighth embodiment of the invention, the present disclosure provides a cover for an electronic device according to the sixth or seventh embodiment, wherein the first and second adhesive layers are pressure-sensitive adhesive layers.

In a ninth embodiment of the invention, the present disclosure provides a cover for an electronic device according to any one of the fourth to eighth embodiments, wherein if mounted to the electronic device the protective cover conforms to the surface of the electronic device.

In a tenth embodiment of the invention, the present disclosure provides a cover for an electronic device according to the ninth embodiment, wherein the protective cover has at least one opening therethrough to permit a user to access an operational control feature of the electronic device.

In an eleventh embodiment of the invention, the present disclosure provides a cover for an electronic device according to any one of the fourth to tenth embodiments, wherein the electronic device is a cell phone or a tablet computer.

In a twelfth embodiment of the invention, the present disclosure provides a cover for an electronic device according to any one of the fourth to eleventh embodiments, wherein the protective cover is thermoformed.

In a thirteenth embodiment of the invention, the present disclosure provides a cover for an electronic device according to any one of the fourth to twelfth embodiments, wherein the first and second unitary thermoplastic polymer films independently comprise polycarbonate or polyester.

In a fourteenth embodiment of the invention, the present disclosure provides a cover for an electronic device according to any one of the fourth to thirteenth embodiments, wherein the component d) is present in the curable composition.

In a fifteenth embodiment of the invention, the present disclosure provides a cover for an electronic device according to the fourteenth embodiment, wherein the component d) comprises a free-radical photoinitiator.

In a sixteenth embodiment of the invention, the present disclosure provides a cover for an electronic device according to any one of the fourth to fifteenth embodiments, wherein the component b) comprises at least one of 1,6-hexanediol di(meth)acrylate or an alkoxylated tetrahydrofurfuryl (meth)acrylate.

In a seventeenth embodiment of the invention, the present disclosure provides a cover for an electronic device according to any one of the fourth to sixteenth embodiments, wherein the component a) the urethane (meth)acrylate compound includes at least one of an isocyanurate ring or a biuret group.

In an eighteenth embodiment of the invention, the present disclosure provides a cover for an electronic device according to any one of the fourth to seventeenth embodiments, wherein the curable composition comprises alpha alumina particles having a Dv50 of from 0.1 to 1 micron.

In a nineteenth embodiment of the invention, the present disclosure provides a cover for an electronic device according to the eighteenth embodiment, wherein the alpha alumina particles have a Dv50 of from 0.2 to 0.3 micron.

In a twentieth embodiment of the invention, the present disclosure provides a cover for an electronic device according to the eighteenth or nineteenth embodiment, wherein the at least partially cured curable composition comprises from 0.2 to 3 weight percent of the alpha alumina particles.

In a twenty-first embodiment of the invention, the present disclosure provides a cover for an electronic device according to any one of the fourth to twentieth embodiments, wherein the at least partially cured curable composition comprises carbamylene groups.In a twenty-second embodiment, the present disclosure provides a cover for an electronic device according to any one of the fourth to twentieth embodiments, wherein the at least partially cured curable composition comprises a polyether.

In a twenty-third embodiment of the invention, the present disclosure provides a method of making a protective cover for an electronic device, the method comprising:
thermoforming a composite film to provide a protective cover comprising a central planar section having first and second opposed major surfaces, wherein the central planar section is bounded by at least two linear side sections, and wherein the composite film comprises:
   a first unitary thermoplastic polymer film having first and second opposed major surfaces;
   a low surface energy abrasion resistant layer disposed on the first major surface of the first unitary thermoplastic polymer film, wherein the low surface energy abrasion resistant layer comprises an at least partially cured curable composition, the curable composition comprising components:
      a) 70 to 95 weight percent of urethane (meth)acrylate compound having an average (meth)acrylate functionality of 3 to 9, based on the total weight of components a) to d);
      b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
      c) 0.5 to 2 weight percent of silicone (meth)acrylate, based on the total weight of components a) to d); and
      d) optional effective amount of photoinitiator; and
a first adhesive layer proximate and securely bonded to the second major surface of the first unitary thermoplastic polymer film,
wherein the at least two linear side sections extend out of plane from the central planar section to define inner and outer surfaces of the protective cover, and wherein the low surface energy abrasion resistant layer is disposed on at least a portion of the outer surface.

In a twenty-fourth embodiment of the invention, the present disclosure provides a method according to the twenty-third embodiment, wherein the composite film further comprises a releasable liner releasably adhered to first adhesive layer.

In a twenty-fifth embodiment of the invention, the present disclosure provides a method according to the twenty-third embodiment, wherein the composite film further comprises:
a second unitary thermoplastic polymer film having two opposed major surfaces, the second unitary thermoplastic polymer film being proximate and securely bonded to the first adhesive layer; and
a second adhesive layer proximate and securely bonded to the second unitary thermoplastic polymer film opposite the first adhesive layer.

In a twenty-sixth embodiment of the invention, the present disclosure provides a method according to the twenty-fifth embodiments, wherein the composite film further comprises a releasable liner releasably adhered to the second adhesive layer.

In a twenty-seventh embodiment of the invention, the present disclosure provides a method according to the twenty-fifth or twenty-sixth embodiment, wherein the first and second adhesive layers are pressure-sensitive adhesive layers.

In a twenty-eighth embodiment of the invention, the present disclosure provides a method according to any one of the twenty-third to twenty-seventh embodiments, wherein if mounted to the electronic device the protective cover conforms to the surface of the electronic device.

In a twenty-ninth embodiment of the invention, the present disclosure provides a method according to the twenty-eighth embodiment, wherein the protective cover has at least one opening therethrough to permit a user to access an operational control feature of the electronic device.

In a thirtieth embodiment of the invention, the present disclosure provides a method according to the twenty-ninth embodiment, wherein the electronic device is a cell phone or a tablet computer.

In a thirty-first embodiment of the invention, the present disclosure provides a method according to any one of the twenty-third to thirtieth embodiments, wherein the first and second unitary thermoplastic polymer films independently comprise polycarbonate or polyester.

In a thirty-second embodiment of the invention, the present disclosure provides a method according to any one of the twenty-third to thirty-first embodiments, wherein the component d) is present in the curable composition.

In a thirty-third embodiment of the invention, the present disclosure provides a method according to the thirty-second embodiment, wherein the component d) comprises a free-radical photoinitiator.

In a thirty-fourth embodiment of the invention, the present disclosure provides a method according to any one of the twenty-third to thirty-third embodiments, wherein the component b) comprises at least one of 1,6-hexanediol di(meth)acrylate or an alkoxylated tetrahydrofurfuryl (meth)acrylate.

In a thirty-fifth embodiment of the invention, the present disclosure provides a method according to any one of the twenty-third to thirty-fourth embodiments, wherein in the component a) the urethane (meth)acrylate compound includes at least one of an isocyanurate ring or a biuret group.

In a thirty-sixth embodiment of the invention, the present disclosure provides a method according to any one of the twenty-third to thirty-fifth embodiments, wherein the curable composition comprises alpha alumina particles having a Dv50 of from 0.1 to 1 micron.

In a thirty-seventh embodiment of the invention, the present disclosure provides a method according to the thirty-sixth embodiment, wherein the alpha alumina particles have a Dv50 of from 0.2 to 0.3 micron.

In a thirty-eighth embodiment, of the invention the present disclosure provides a method according to any one of the thirty-sixth or thirty-seventh embodiment, wherein the at least partially cured curable composition comprises from 0.15 to 9 weight percent of the alpha alumina particles.

In a thirty-ninth embodiment of the invention, the present disclosure provides a method according to any one of the twenty-third to thirty-eighth embodiments, wherein the at least partially cured curable composition comprises carbamylene groups.

In a fortieth embodiment of the invention, the present disclosure provides a method according to any one of the twenty-third to thirty-ninth embodiments, wherein the at least partially cured curable composition comprises a polyether.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight.

**TABLE 1**

| DESIGNATION | DESCRIPTION |
|---|---|
| DESN100 | DESMODUR N100 biuret-based hexamethylene diisocyanate oligomer, 100 % solids, 22.0 weight percent NCO, 191 g/eq., obtained from Covestro LLC, Pittsburgh, Pennsylvania |
| DESN3300A | DESMODUR N3300A isocyanurate-based hexamethylene diisocyanate oligomer, 100 % solids, 21.8 weight percent NCO, 193 g/eq., obtained from Covestro LLC |
| BHT | 2,6-Di-t-butyl-4-methylphenol, available from Aldrich Chemical Co., Milwaukee, Wisconsin |
| 4-hydroxy TEMPO | 4-Hydroxy-2,2,6,6-tetramethylpiperidine-1-oxyl, available from Aldrich Chemical Co. |
| HEA | 2-hydroxyethyl acrylate, obtained from Alfa Aesar, , Ward Hill, Massachusetts |
| PETA | pentaerythritol triacrylate, obtained as SR444C from Sartomer Co., Exton, Pennsylvania |
| HDDA | 1,6-hexanediol diacrylate, obtained from Sartomer Co. |
| MEK | methyl ethyl ketone from Alfa Aesar |
| MP | 1-methoxy-2-propanol |
| PC film | Bisphenol A-based polycarbonate film, 5 mil (0.13 mm) thick, available as LEXAN 8010-112MC film from Sabic Innovative Plastics, Riyadh, Saudi Arabia |
| ESACURE ONE | photoinitiator, obtained from Lamberti USA, Conshohocken, Pennsylvania |
| SR611 | alkoxylated tetrahydrofurfuryl acrylate monomer from Sartomer Co. |
| SR217 | Cycloaliphatic acrylate monomer from Sartomer Co. |
| HFPO-Urethane | See U.S. Pat. No. 8,728,623 (Pokorny et al.) Col. 15, lines 14-34 for preparation of DES N100/0. 95 PET3A/0.10 HFPO-C(=O)NHCH₂CH₂OH |
| C₄F₉-acrylate | FBSEA (C₄F₉SO₂N(CH₃)CH₂CH₂OC(=O)CH=CH2) is made by the procedure of Example 2A of PCT Internat. Publ. No. WO 01/30873 (Savu et al.) |
| TEG2100 | TEGORAD 2100 silicone acrylate, obtained from Evonik Industries |
| TEG2250 | TEGORAD 2250 silicone polyether acrylate, obtained from Evonik Industries |
| TEG2500 | TEGORAD 2500 silicone polyether acrylate, obtained from Evonik Industries |
| Capa3031 | Low molecular weight trifunctional caprolactone polyol, obtained from Perstorp Group |
| DBTDL | Dibutyltin dilaurate, obtained from Aldrich Chemical Co., Milwaukee, Wisconsin |
| Celloxide 2010P | Cycloaliphatic epoxide obtained from Daicell USA, Fort Lee, New Jersey |
| Cyracure CPI-6976 | Mixture of aromatic sulfonium PF₆⁻ salts from Aceto Corporation, Lake Success, New York |
| PET film | SCOTCHPAK PET, 2 mil (0.051 mm) primed polyester film, 3M Company, St. Paul, Minnesota. The coatings were applied on the primed side. |
| 20 nm SiO₂ | Prepared according to the procedure on page 14, line 30 to page 15, line 10 of PCT Internat. Publ. No. WO 2014/011731 A1 (Pokorny et al.) |
| Alpha alumina NP | Alpha-Alumina Nano Powder, 99.99% purity, average particle size ~100 nm, surface area 13-15 m2/g, alpha phase, obtained as 26N-0811UPA from Inframat Advanced Materials, Manchester, Connecticut |

### ABRASION TEST (eraser abrasion test)

Abrasion of film samples was tested downweb to the coating direction using a Taber model 5750 Linear Abraser (Taber Industries, North Tonawanda, New York). The film samples tested were not thermoformed. The collet oscillated at 40 cycles/minute and the length of stroke was 2 inches (5.08 cm). The abrasive material used for this test was an eraser insert (obtained from Summers Optical, a division of EMS Acquisition Corp., Hatfield, Pennsylvania). The eraser insert had a diameter of 6.5 mm and met the requirements of military standard Mil-E-12397B.

The eraser insert was held in place through duration of test by the collet. One sample was tested on three different spots for each example with a weight of 1.1 kg weight and 20 cycles. After abrasion, the sample was cleaned by wiping with a lens cleaning towelette (Radnor Products, Radnor, Pennsylvania). The optical haze and transmission of each sample was measured using a Haze-Gard Plus haze meter (BYK Gardner, Columbia, Maryland) at the three different spots. The reported values of haze and transmission are the average of the values obtained on the three different spots. The delta haze value for each sample was calculated by subtracting the haze of an untested region of the sample. The loss of transmission for each sample was calculated by subtracting the transmission after testing from the transmission of an untested region of the sample.

### ABRASION TEST (steel wool abrasion test)

The steel wool abrasion test was performed on a Taber model 5750 Linear Abraser (Taber Industries, North Tonawanda, New York). The collet oscillated at 60 cycles/minute and the length of stroke is 4 inches. The abrasive material used for this test was a steel wool pad (Grade#0000, 2 cm × 2 cm square). The steel wool pad was held in place through duration of test by the collet. One sample was tested for each example with a weight of 1.0 kg weight and 500 cycles. After abrasion, the sample was cleaned by wiping with a lens cleaning towelette (Radnor Products, Radnor, Pennsylvania). The optical haze and transmission of each sample was measured using a Haze-Gard Plus haze meter (BYK Gardner, Columbia, Maryland) at three different points along the abraded area. The reported values of haze and transmission are the average of the values obtained on the three different spots. The delta haze value for each sample was calculated by subtracting the haze of an untested region of the sample. The loss of transmission for each sample was calculated by subtracting the transmission after testing from the transmission of an untested region of the sample.

### PREPARATION OF ALPHA ALUMINA NANOPARTICLES (NP)

The alpha alumina nanoparticle dispersions were made through a media milling process. MEK (280 grams), 86 grams of BYK-W 9010 dispersing additive (BYK USA, Wallingford, Connecticut), and 418 grams of ultrapure alpha alumina NP were mixed together using a Dispermat CN-10 laboratory high-shear disperser (BYK-Gardner USA, Columbia, Maryland). The mixed dispersion was milled in MiniCer laboratory media mill (Netzsch, Exton, Pennsylvania) with 0.2 mm yttria stabilized zirconia milling media. Aliquots (40 grams) were sampled at 10, 20, 30 and 90 min. The solid content of the samples collected at 10, 20, 30 and 90 min was 59.6 weight percent, 60.1 weight percent, 61.1 weight percent and 53.6 weight percent, respectively. 0.2 mL of alpha alumina NP was diluted with 2 mL of MEK prior to particle size analysis by laser diffraction, which was performed on Horiba LA-960. Dv10 means a cumulative 10% point of diameter (or 10% pass particle size). Dv50 means a cumulative 50% point of diameter (or 50% pass particle size), also refer to median diameter. Dv90 means a cumulative 90% point of diameter. The volume average Dv10, Dv50 and Dv90 values (in micrometers, µm) for each filled resin are shown in Table 2, below.

**TABLE 2**

| PARTICLES | Dv10, microns | Dv50, microns | Dv90, microns |
|---|---|---|---|
| Alpha alumina NP | 1.643 | 4.029 | 8.033 |
| Milled for 30 min | 0.128 | 0.228 | 0.414 |
| Milled for 10 min | 0.133 | 0.234 | 0.402 |
| Milled for 20 min | 0.128 | 0.221 | 0.357 |
| Milled for 90 min | 0.159 | 0.39 | 1.409 |

### THERMOFORMING ON LENS MOLD

Thermoforming on lens mold was performed using a MAAC sheet feed vacuum thermoforming system (MAAC machinery Corp., Carol Stream, Illinois). The thermoforming system clamped the coated film sheet to be thermoformed, and the sheet was shuttled between top and bottom heating elements to heat the sheet to a temperature of 340 °F (171 °C) to 380 °F (193 °C). The heated sheet was then shuttled over the top of a forming tool with the 8 base lens geometry (length of the mold cavity was 8 mm and the width was 65 mm). The tool was heated to a temperature of 150 °F (66 °C) to 250 °F (121 °C). Then, the tool was raised into the sheet and vacuum was pulled to force the heated sheet to form to the 8 base lens tool geometry.

Hardcoats on thermoplastic films were assessed for their thermoformability, by thermoforming them into a lens shape and determining the amount of cracking of the hardcoat from the edges of the lens shape to the center of the lens shape. The most preferred embodiments exhibit no cracking anywhere on the lens shape. If the coating on the lens shape cracked, the crack usually started on the edge. The percent crack from the edge was measured from the edge of the lens to the center of the lens. For example, if a crack started at the edge and continued 20% of the distance between the edge and the center of the lens shape, then cracking was reported as 20% from the edge. If cracks were present half way between the edge and the center, the crack level was recorded as 50% crack up from the edge. The percentage location was measured visually with an un-aided eye.

### RATING SCALE FOR THE AMOUNT OF CRACKS

| | |
|---|---|
| none = | no cracks |
| very slight = | 1-3 cracks |
| slight = | 4-10 cracks |
| slight cracking = | few cracks observed and the distance from crack to crack was relatively large (> 6 mm). |

### THERMOFORMING ON 1-MM EDGE ALUMINUM PHONE MOLD

Thermoforming on a one-millimeter edge aluminum phone mold was performed on a Hytech AccuForm IL50 thermoforming apparatus. The mold had a generic phone shape, with 1 mm radii on four edges. The four corners of the top surface where the films are formed have radii of 0.1 in (2.54 mm), 0.15 in (3.81 mm), 0.25 in (6.35 mm), and 0.5 in (12.7 m), respectively. The thermoforming conditions include heated platen temperature of 350 °F (177 °C), mold temperature of 80 °F (27 °C), preheat time of 6 seconds, preheat pressure of 60 psi and form time of 6 seconds.

The thermoformed samples were rated as "no cracks", "cracks at edge only" and "cracks across surface". "Cracks at the edge only" means cracking developed around the bottom of the sample where the bottom of the mold touches the mold platform of the molding machine. It does not necessary mean the cracks were on the actual usable part of the thermoformed samples.

### STATIC WATER CONTACT ANGLE MEASUREMENT

Static water contact angle was measured on KRUSS Drop Shape Analyzer DSA100, Kruss Gmbh, Hamburg, Germany. Water (5 microliters) was transferred onto the surface, and the static water contact angle was obtained through analyzing the image. Three measurements were performed on different locations on the surface and the average value and standard deviation were calculated.

### CROSSHATCH ADHESION TEST

Crosshatch adhesion of each sample was measured using the ASTM D3359-09, "Standard Test Methods for Measuring Adhesion by Tape Test", Test Method B using 3M 893 filament tape (3M Company, St. Paul, Minnesota).

### PREPARATIVE EXAMPLE 1 (PE1)

A 250-mL jar equipped with a magnetic stir bar was charged with 39.76 g (0.2082 eq.) of DESN100, 25 g of MEK, 12.33 g (0.1062 eq.) of HEA, 47.91 g (0.1062 eq.) of PETA, for a total of 1.01 eq. OH per eq. of NCO, 0.025 g (250 ppm) BHT, 0.005 g (50 ppm) of 4-hydroxy TEMPO, and 0.05 g (500 ppm) of DBTDL. The jar was placed in a water bath at room temperature and allowed to stir for 10 min. After 10 min., it was placed into a 55°C bath for 4 hr. At the end of that time, the reaction mixture was monitored by FTIR and found to have no NCO peak at 2265 cm⁻¹. The resulting material was 80 weight percent solids.

### PREPARATIVE EXAMPLES PE2-PE8 (PE2-PE8)

PE2-PE14 were prepared in the same manner as PE1 described above by reacting the preparations reported in Table 3. The reactions were carried out using an appropriately sized jar. The amount of materials used in preparations described in Table 3 were reported in grams (g), and, unless noted otherwise, further included 250 ppm BHT, 50 ppm 4-hydroxy TEMPO, and 500 ppm DBTDL with respect to solids. The resulting products were 80 weight percent solids in MEK.

**TABLE 3**

| PREPARATIVE EXAMPLE | DESCRIPTION | ISOCYANATE, g | HEA, g | PETA, g | MEK, g | AVERAGE (METH)ACRYLATE FUNCTIONALITY OF URETHANE (METH)ACRYLATE COMPOUND |
|---|---|---|---|---|---|---|
| PE1 | 1.0 DESN100 + 0.5 HEA + 0.5 PETA | DESN100, 39.76 | 12.33 | 47.91 | 25 | 7.2 |
| PE2 | 1.0 DESN100 + PETA | DESN100, 29.32 | | 70.68 | 25 | 10.8 |
| PE3 | 1.0 DESN100 + 0.25 HEA + 0.75 PETA | DESN100, 33.75 | 5.23 | 61.01 | 25 | 9 |
| PE4 | 1.0 DESN100 + 0.75 HEA + 0.25 PETA | DESN100, 48.37 | 22.5 | 29.14 | 25 | 5.4 |
| PE5 | 1.0 DESN3300 + 1.0 PETA | DESN3300, 29.5 | | 70.50 | 25 | 10.5 |
| PE6 | 1.0 DESN3300 + 0.5 HEA + 0.5 PETA | DESN3300, 95.99 | 29.47 | 114.54 | 60 | 7 |
| PE7 | 1.0 DESN100 + 1.0 HEA | DESN100, 61.96 | 38.04 | | 25 | 3.6 |
| PE8 | 1.0 DESN3300 + 1.0 HEA | DESN3300, 62.16 | 37.84 | | 25 | 3.5 |

The average (meth)acrylate functionality is calculated in the following fashion. The functionality of the added acrylates for each compound is first calculated. For instance, the PE3 below is designated as 1.0 DESN100 + 0.25 HEA + 0.75 PETA. This means that the compound is the reaction product of 1 equivalent of isocyanate groups (as DESN100) and 0.25 hydroxyl equivalents of hydroxyethyl acrylate and 0.75 hydroxyl equivalents of PETA. The HEA has one acrylate group per hydroxyl group and the PETA has 3 acrylate groups per hydroxyl group. The functionality of added acrylates for this compound is then (0.25 × 1) + (0.75 × 3) = 2.5. The average (meth)acrylate functionality is found by multiplying the functionality of the added acrylates for each compound by the average functionality of the polyisocyanate. According to Covestro, the average functionality for DESN100 is 3.6, so the average (meth)acrylate functionality for the compound is at 2.5 × 3.6 = 9.

By this method, average functionality of polyisocyanates for DESN3300, DESN3800, and DESZ4470BA are 3.5, 3.0, and 3.3, respectively.

### PREPARATIVE EXAMPLES PE9-PE16

Coating solutions were prepared by mixing components as reported in Table 4. Then, to prepare each preparative example, the indicated coating solution composition in Table 4 was coated at 32 weight percent solids onto PC film. In Table 5, the identity of the Preparative Example Oligomer is reported for each Preparative Hard Coated Film. The coating was done using a No. 7 wire-wound rod (available from RD Specialties, Webster, New York, nominal wet film thickness 0.63 mils (16.0 microns)) and dried at 80 °C for 1.5 min. The dried coating was then cured using a UV processor equipped with an H-type bulb (500W, available from Heraeus Noblelight America/Fusion UV Systems, Gaithersburg, Maryland) at 100% power under nitrogen at 30 feet/minute (12.1 m/min). The cured coating had an estimated thickness of about 3.4 microns.

**TABLE 4**

| PREPARATIVE EXAMPLES PE9-PE16 | CHARGE, g | SOLIDS, g | SOLVENT | WEIGHT PERCENT SOLIDS | WEIGHT PERCENT OF COATING SOLUTION |
|---|---|---|---|---|---|
| PREPARATIVE EXAMPLE OLIGOMER | 9.33 | 7.464 | 1.866 | 93.3 | 37.32 |
| HDDA | 0.16 | 0.16 | | 2.00 | 0.64 |
| SR611 | 0.16 | 0.16 | | 2.00 | 0.64 |
| TEG2100 | 0.056 | 0.056 | | 0.70 | 0.22 |
| ESACURE ONE | 0.16 | 0.16 | | 2.00 | 0.64 |
| MP | 15.134 | | 15.134 | 0.00 | 60.54 |

**TABLE 5**

| PREPARATIVE EXAMPLE HARD COATED FILMS | PREPARATIVE EXAMPLE OLIGOMER |
|---|---|
| PE9 | PE1 |
| PE10 | PE2 |
| PE11 | PE3 |
| PE12 | PE4 |
| PE13 | PE5 |
| PE14 | PE6 |
| PE15 | PE7 |
| PE16 | PE8 |

Thermoforming of Preparative Examples PE9-PE16 to generate thermoformed CPEX9-CPEX16 was performed using a MAAC sheet feed vacuum thermoforming system (MAAC Machinery Corp., Carol Stream, Illinois). The thermoforming system clamped the coated film sheet to be thermoformed, and the sheet was shuttled between top and bottom heating elements to heat the sheet to a temperature of 340 °F (171 °C) to 380 °F (193 °C). The heated sheet was then shuttled over the top of a forming tool with the 8 base lens geometry (length of the mold cavity was 8 mm and the width was 65 mm). The tool was heated to a temperature of 150 °F (66°C) to 250 °F (121 °C). Then, the tool was raised into the sheet and vacuum was pulled to force the heated sheet to form to the 8 base lens tool geometry.

Test results for films used for thermoforming are reported in Table 6, below.

**TABLE 6**

| FILM USED | INITIAL HAZE, % | ERASER ABRASION TEST Δ HAZE, % | TRANSMISSION AFTER ERASER ABRASION TEST, % | % LOSS IN TRANSMISSION AFTER ERASER ABRASION TEST, % | CROSSHATCH ADHESION TEST RATING |
|---|---|---|---|---|---|
| PE9 | 0.17 | 5.09 | 90.9 | 1.8 | 5B |
| PE10 | 0.1 | 3.68 | 90.9 | 1.8 | 5B |
| PE11 | 0.13 | 4.13 | 90.9 | 1.9 | 5B |
| PE12 | 0.12 | 10.08 | 90.7 | 2.1 | 5B |
| PE13 | 0.13 | 4.43 | 90.8 | 1.8 | 5B |
| PE14 | 0.12 | 7.14 | 90.7 | 2 | 5B |
| PE15 | 0.15 | 15.25 | 90.6 | 2.3 | 5B |
| PE16 | 0.15 | 21.15 | 90.4 | 2.3 | 5B |

Thermoforming results are reported in Table 7, below.

**TABLE 7**

| THERMOFORMED PREPARATIVE EXAMPLE | PREPARATIVE EXAMPLE USED FOR THERMO FORMING | THERMOFORMING RESULTS |
|---|---|---|
| PE17 | PE9 | cracks at edge only |
| PE18 | PE10 | cracks 30% up from edge |
| PE19 | PE11 | cracks 25% up from edge |
| PE20 | PE12 | cracks at edge only |
| PE21 | PE13 | cracks 25% up from edge |
| PE22 | PE14 | cracks at edge only |
| PE23 | PE15 | no cracks |
| PE24 | PE16 | no cracks |

### PREPARATION OF FORMULATION A1

Formulation A1 was made by adding 0.64 g of photoinitiator ESACURE ONE and 0.32 g of TEG2100 to 34.80 g of PE1 (80 wt. % of MEK), followed by dilution with 48 g of ethanol and 6.0 g of 1-methoxy-2-propanol. The resulting Formulation A1 had 32.1 wt. % solids.

### PREPARATIVE EXAMPLES PE25-PE38

Formulation A1 was used to make coating formulations in Table 8. HDDA and SR217 in Table 8 were diluted to 32 wt. % solids in ethanol. Tego Rad additives (TEG2500 and TEG2700) were diluted to 10 wt. % solids in ethanol prior to use. PE25-PE31 were made by mixing different amounts of prepared solutions of ingredients at room temperature. The formulations were hand-coated on 5 mil PC substrate using a #12 wire-wound rod (RD Specialties, Webster, New York, nominal wet film thickness 1.08 mils (27.4 microns)). The coated PC films were allowed to dry at room temperature first and then dried at 80 °C in an oven for 1 min. The dried samples were cured using a UV processor equipped with an H-type bulb (500 W, Heraeus Noblelight America/Fusion UV Systems), Gaithersburg, Maryland) at 100% power under nitrogen purge at 30 feet/min (12.1 m/min). Coatings made from PE30 and PE31 had an uneven surface.

The coating formulations and resulted coated articles were reported in Table 9. The haze and transmission before and after eraser abrasion tests were measured and results are reported in Table 10. The thermoforming on lens mold and crosshatch results are reported in Table 11.

**TABLE 8**

| PREPARATIVE EXAMPLE | FORMULATION A1 (32wt. % of ethanol), g | HDDA (32wt. % of ethanol), g | SR217 (32wt. % of ethanol), g | TEG2500 (10wt. % of ethanol), g | TEG2700 (10wt. % of ethanol), g |
|---|---|---|---|---|---|
| PE25 | 5.00 | 0.00 | 0.00 | 0.00 | 0.00 |
| PE26 | 4.75 | 0.25 | 0.00 | 0.00 | 0.00 |
| PE27 | 4.75 | 0.00 | 0.25 | 0.00 | 0.00 |
| PE28 | 4.50 | 0.25 | 0.00 | 0.08 | 0.00 |
| PE29 | 4.50 | 0.25 | 0.00 | 0.16 | 0.00 |
| PE30 | 4.50 | 0.25 | 0.00 | 0.00 | 0.08 |
| PE31 | 4.50 | 0.25 | 0.00 | 0.00 | 0.16 |

**TABLE 9**

| HARDCOATED PC FILM PREPARATIVE EXAMPLE | PREPARATIVE EXAMPLE |
|---|---|
| PE32 | PE25 |
| PE33 | PE26 |
| PE34 | PE27 |
| PE35 | PE28 |
| PE36 | PE29 |
| PE37 | PE30 |
| PE38 | PE31 |

**TABLE 10**

| HARDCOATED PC FILM | HAZE, % | | | TRANSMISSION, % | | |
|---|---|---|---|---|---|---|
| | Initial | Abraded | Δ Haze | Initial | Abraded | Δ Transmission |
| PE32 | 0.26 | 7.10 | 6.84 | 92.7 | 90.9 | -1.8 |
| PE33 | 0.16 | 8.13 | 7.97 | 92.6 | 91.6 | -1.0 |
| PE34 | 0.14 | 9.25 | 9.11 | 92.6 | 91.0 | -1.6 |
| PE35 | 0.26 | 6.98 | 6.72 | 92.7 | 91.2 | -1.5 |
| PE36 | 0.51 | 6.36 | 5.85 | 92.8 | 91.2 | -1.6 |
| PE37 | 0.37 | 9.60 | 9.23 | 92.7 | 91.5 | -1.2 |
| PE38 | 0.41 | 6.66 | 6.25 | 92.7 | 91.3 | -1.4 |

**TABLE 11**

| HARDCOATED PC FILM | THERMOFORMING (3 Replicates) | CROSSHATCH ADHESION TEST RATING |
|---|---|---|
| PE32 | 3 replicates crack on edge | 5B |
| PE33 | 2 replicates crack 30% up on edge; 1 cracks on edge | 5B |
| PE34 | 2 replicates have no crack; 1 cracks on edge | 5B |
| PE35 | 3 replicates crack on edge | 5B |
| PE36 | 1 replicate has no crack, 1 cracks on edge, 1 cracks 15% up on edge | 5B |
| PE37 | 3 replicates have uneven surface but no cracking | 5B |
| PE38 | 3 replicates have uneven surface but no cracking | 5B |

### PREPARATIVE EXAMPLES PE39-PE55

Formulation A1 was used in making the formulations shown in Table 12. The SR611 used in Table 12 was diluted to 32wt. % solids in ethanol. TEG2500 was diluted to 10 wt. % solids in ethanol. The formulations were made by mixing different amounts of prepared solutions of ingredients at room temperature. The formulations were hand-coated on 5-mil (0.127 mm) PC substrate using a #12 wire-wound rod (nominal wet film thickness 1.08 mils (27.4 microns)). The coated PC films were allowed to dry at room temperature first and then dried at 80 °C in an oven for 1 min. The dried samples were cured using a UV processor equipped with an H-type bulb (500 W, Heraeus Noblelight America /Fusion UV Systems, Gaithersburg, Maryland) at 100% power under nitrogen purge at 30 feet/min (12.1 m/min).

The formulations and resultant coated articles are reported in Table 13. The haze and transmission before and after eraser abrasion tests were measured and results are reported in Table 14. The thermoforming on lens mold and crosshatch results are reported in Table 15.

**TABLE 12**

| FORMULATION | FORMULATION A1 (32.1 wt. % solids), g | SR611 (32wt. % solids in ethanol), g | TEG2500 (10 wt. % solids in ethanol), g | TOTAL SOLIDS, wt. % |
|---|---|---|---|---|
| PE39 | 5.00 | 0.00 | 0.00 | 32.1 |
| PE40 | 4.75 | 0.25 | 0.00 | 32.1 |
| PE41 | 4.50 | 0.50 | 0.00 | 32.1 |
| PE42 | 4.25 | 0.75 | 0.00 | 32.1 |
| PE43 | 4.75 | 0.25 | 0.08 | 31.7 |
| PE44 | 4.50 | 0.50 | 0.08 | 31.7 |
| PE45 | 4.25 | 0.75 | 0.08 | 31.7 |

**TABLE 13**

| HARDCOATED PC FILM | FORMULATION |
|---|---|
| PE46 | PE39 |
| PE47 | PE40 |
| PE48 | PE41 |
| PE49 | PE42 |
| PE50 | PE43 |
| PE51 | PE44 |
| PE52 | PE45 |

**TABLE 14**

| HARDCOATED PC FILM | HAZE, % | | | TRANSMISSION, % | | |
|---|---|---|---|---|---|---|
| | Initial | Abraded | Δ Haze | Initial | Abraded | Δ Transmission |
| 5 mil PC film | 0.07 | 46.7 | 46.63 | 90.6 | 90.4 | -0.2 |
| PE46 | 0.13 | 9.41 | 9.28 | 92.8 | 90.9 | -1.90 |
| PE47 | 0.17 | 7.23 | 7.06 | 92.7 | 91.1 | -1.60 |
| PE48 | 0.12 | 7.34 | 7.22 | 92.7 | 91.2 | -1.50 |
| PE49 | 0.13 | 7.10 | 6.97 | 92.8 | 91.3 | -1.50 |
| PE50 | 0.14 | 5.91 | 5.77 | 92.8 | 91.2 | -1.60 |
| PE51 | 0.18 | 6.78 | 6.60 | 92.8 | 91.2 | -1.60 |
| PE52 | 0.23 | 12.7 | 12.47 | 92.9 | 91.2 | -1.70 |

**TABLE 15**

| HARD COATED PC FILM | THERMOFORMING (3 Replicates) | CROSSHATCH ADHESION TEST RATING |
|---|---|---|
| PE46 | cracks on edge | 5B |
| PE47 | no crack | 5B |
| PE48 | 2 replicates crack on edge, 1 replicate had very small cracks 25% up on edge | 5B |
| PE49 | cracks on edge | 5B |
| PE50 | very slight cracks on edge | 5B |
| PE51 | very slight cracks on edge | 5B |
| PE52 | very slight cracks on edge | 5B |

To compare the effects of coating thickness on Δ Haze and Δ Transmission, PE40 was coated on 5 mil PC films using #12, #9, and #7 wire-wound rods (RD Specialties, nominal wet film thicknesses of 1.08 mils (27.4 microns), 0.81 mil (20.57 microns), and 0.62 mil (16.00 microns), respectively), and the resulting coated PC films were named as PE 53, PE54 and PE55, respectively. Each coating thickness had 5 replicates. The coated PC films were allowed to dry at room temperature first and then dried at 80 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min). The haze and transmission of cured hardcoats were measured after eraser abrasion test (Table 16). After thermoforming on lens mold, all hardcoated PC films had no or only slight edge cracking (2 replicates using a #12 wire-wound rod had an area of very slight and few lines that went up about 20-30% from the edge).

**TABLE 16**

| HARDCOATED PC FILM | HAZE, % | | | TRANSMISSION, % | | |
|---|---|---|---|---|---|---|
| | Initial | Abraded | Δ Haze | Initial | Abraded | Δ Transmission |
| PE53 | 0.09 | 7.49 | 7.40 | 91.0 | 90.8 | -0.20 |
| PE54 | 0.16 | 7.91 | 7.75 | 91.0 | 90.8 | -0.20 |
| PE55 | 0.10 | 8.40 | 8.30 | 91.0 | 90.8 | -0.20 |

### PREPARATION OF FORMULATION B

Formulation B was made by adding 0.64 g of photoinitiator Esacure One to 34.80 g of PE1 (80 wt. % of MEK), followed by dilution with 54 g of MEK. The resulting Formulation B had 32.1 wt. % solids.

### PREPARATIVE EXAMPLES PE56-PE71

Formulation B was used in making the formulations shown in Table 17. The SR611 solution used in Table 17 had 32 wt. % solids in MEK. The TEGO Rad additives (TEG2100, TEG2250, TEG2500) were diluted to 10 wt. % solids in MEK. The fluoro additives (HFPO-Urethane and C₄F₉-acrylate) had 30 wt. % solids in MEK. The formulations were made by mixing different amounts of prepared solutions of ingredients at room temperature. The formulations were hand-coated on 2 mil PET substrates using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

The formulations and resulted coated articles are reported in Table 18. The haze and transmission before and after eraser abrasion tests as well as static water contact angle were measured and results are reported in Table 19. Six replicates of PE61 were thermoformed on 1 mm edge aluminum phone mold following the described procedure. Cracks were observed at the edge only. PE56, PE57 and PE60 were thermoformed on 1 mm edge aluminum phone mold following the described procedure and cracks were observed at the edge only.

**TABLE 17**

| FORMULATION | Formulation B (32.1 wt. %), g | SR611 (32 wt. %), g | TEG2100 (10 wt. % of MEK), g | TEG2250 (10 wt. % of MEK), g | TEG2500 (10 wt. % of MEK), g | HFPO-Urethane (30 wt. % of MEK), g | C4F9-Acrylate (30 wt. % of MEK), g | Tegorad/ HFPO-Urethane in Total Solids, % | TOTAL SOLIDS, wt. % |
|---|---|---|---|---|---|---|---|---|---|
| PE56 | 2.25 | 0.13 | 0.00 | 0.00 | 0.00 | 0.000 | 0.000 | 0.00 | 32.1 |
| PE57 | 2.25 | 0.13 | 0.08 | 0.00 | 0.00 | 0.000 | 0.000 | 1.04 | 31.4 |
| PE58 | 2.25 | 0.13 | 0.00 | 0.08 | 0.00 | 0.000 | 0.000 | 1.04 | 31.4 |
| PE59 | 2.25 | 0.13 | 0.00 | 0.00 | 0.08 | 0.000 | 0.000 | 1.04 | 31.4 |
| PE60 | 2.25 | 0.13 | 0.00 | 0.00 | 0.00 | 0.025 | 0.000 | 0.97 | 32.1 |
| PE61 | 2.25 | 0.13 | 0.08 | 0.00 | 0.00 | 0.025 | 0.000 | 1.99 | 31.4 |
| PE62 | 2.25 | 0.13 | 0.00 | 0.00 | 0.00 | 0.000 | 0.026 | 1.01 | 32.1 |
| PE63 | 2.25 | 0.13 | 0.08 | 0.00 | 0.00 | 0.000 | 0.026 | 2.03 | 31.4 |

**TABLE 18**

| HARDCOATED PET FILM | FORMULATION |
|---|---|
| PE64 | PE56 |
| PE65 | PE57 |
| PE66 | PE58 |
| PE67 | PE59 |
| PE68 | PE60 |
| PE69 | PE61 |
| PE70 | PE62 |
| PE71 | PE63 |

**TABLE 19**

| HARDCOATED PET FILM | HAZE, % | | | TRANSMISSION, % | | | STATIC WATER CONTACT ANGLE, ° |
|---|---|---|---|---|---|---|---|
| | Initial | Abraded | Δ Haze | Initial | Abraded | Δ Transmission | |
| PE64 | 0.40 | 5.40 | 5.00 | 91.0 | 90.2 | -0.8 | 69.7 ± 4.3 |
| PE65 | 0.47 | 4.98 | 4.51 | 90.2 | 90.3 | 0.1 | 93.0 ± 0.3 |
| PE66 | 1.50 | 10.80 | 9.30 | 90.2 | 90.2 | 0.0 | 93.1 ± 2.2 |
| PE67 | 4.37 | 10.50 | 6.13 | 90.3 | 90.2 | -0.1 | 90.2 ± 2.3 |
| PE68 | 0.65 | 7.65 | 7.00 | 90.3 | 90.4 | 0.1 | 108.1 ± 0.9 |
| PE69 | 0.58 | 8.44 | 7.86 | 90.2 | 90.3 | 0.1 | 116.0 ± 0.5 |
| PE70 | 0.69 | 4.64 | 3.95 | 90.3 | 90.5 | 0.20 | 78.3 ± 3.1 |
| PE71 | 0.57 | 4.72 | 4.15 | 90.3 | 90.3 | 0.00 | 92.4 ± 0.7 |

### PREPARATION OF FORMULATION A2

Formulation A2 was made by adding 0.64 g of photoinitiator ESACURE ONE and 0.32 g of TEG2100 to 34.80 g of PE1 (80 wt. % of MEK), followed by dilution with 54.0 g of MEK. The resulting Formulation A2 had 32.1 wt. % solids.

### PREPARATIVE EXAMPLES PE72-PE77

Formulation A2 was used in making the formulations shown in Table 20. The SR611 used in Table 20 was diluted to 32 wt. % solids in MEK. The HFPO-Urethane had 30 wt. % solids in MEK. The formulations were made by mixing different amounts of prepared solutions of ingredients at room temperature. The formulations were hand-coated on 2 mil PET substrates using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

The formulations and resulted coated articles are reported in Table 21. The haze and transmission before and after steel wool abrasion tests as well as static water contact angle values were measured and results are reported in Table 22.

**TABLE 20**

| FORMULATION | Formulation A2 (32.1 wt. %), g | SR611 (32 wt. % of MEK), g | HFPO-Urethane (30 wt. % of MEK), g | HFPO-Urethane in Total Solids, wt. % | TOTAL SOLIDS, wt. % |
|---|---|---|---|---|---|
| PE72 | 4.76 | 0.26 | 0.00 | 0.0 | 32.0 |
| PE73 | 4.76 | 0.26 | 0.10 | 1.8 | 32.0 |
| PE74 | 4.76 | 0.26 | 0.22 | 3.9 | 31.9 |

**TABLE 21**

| HARDCOATED PET FILM | FORMULATION |
|---|---|
| PE75 | PE72 |
| PE76 | PE73 |
| PE77 | PE74 |

**TABLE 22**

| HARDCOATED PET FILM | HAZE, % | | | TRANSMISSION, % | | | STATIC WATER CONTACT ANGLE, ° |
|---|---|---|---|---|---|---|---|
| | Initial | Abraded | Δ Haze | Initial | Abraded | Δ Transmission | |
| PE75 | 0.62 | 2.26 | 1.64 | 89.6 | 89.5 | -0.1 | 91.5 ± 3.3 |
| PE76 | 0.73 | 1.69 | 0.96 | 89.5 | 89.5 | 0.0 | 108.9 ± 1.2 |
| PE77 | 0.83 | 1.72 | 0.89 | 89.6 | 89.6 | 0.0 | 110.3 ± 1.6 |

### PREPARATIVE EXAMPLES PE78-PE79

Formulation A2 was used in making the formulations shown in Table 23. The SR611 and HDDA used in Table 23 were diluted to 32 wt. % solids in MEK. The TEG2100 were diluted to 10 wt. % solids in MEK. PE78 and PE79 were made by mixing different amounts of prepared solutions of ingredients at room temperature. The formulations were hand-coated on 2 mil PET substrates using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min). The PET films coated with PE78 and PE79 were labeled as PE80 and PE81.

PE80 and PE81 were thermoformed on 1 mm edge aluminum phone mold following the described procedure and cracks were observed at the edge only.

**TABLE 23**

| FORMULATION | FORMULATION A2 (32.1 wt. %), g | SR611 (32 wt. %), g | HDDA (32 wt. % of MEK), g | TEGORAD 2100 (10 wt. %of MEK), g | HDDA IN TOTAL SOLIDS wt. % | TEGORAD 2100 IN TOTAL SOLIDS, wt. % | TOTAL SOLIDS, wt. % |
|---|---|---|---|---|---|---|---|
| PE78 | 4.76 | 0.26 | 0 | 0 | 0 | 0 | 32.0 |
| PE79 | 4.50 | 0 | 0.81 | 0.17 | 15 | 1 | 32.4 |

### PREPARATION OF FORMULATIONS C and D

Formulation C and Formulation D were made by mixing the listed ingredients in Table 24 and Table 25 at room temperature, respectively. The formulations were hand-coated on 2 mil PET substrates using #12 wire-wound rod (RD Specialties, nominal wet film thickness 1.08 mils (27.4 microns)). The coated PET films were allowed to dry at room temperature first and then dried at 80 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

**TABLE 24**

| FORMULATION C | |
|---|---|
| INGREDIENT | QUANTITY, g |
| PE2 | 17.40 |
| TEG2100 | 0.16 |
| Esacure One | 0.32 |
| MEK | 27.00 |

**TABLE 25**

| FORMULATION D | |
|---|---|
| INGREDIENT | QUANTITY, g |
| PE3 | 17.40 |
| TEG2100 | 0.16 |
| Esacure One | 0.32 |
| MEK | 27.00 |

### PREPARATIVE EXAMPLES PE82 - PE84

Formulation C, D, and A2 were coated on PET films and the resulting coated articles were labeled as PE82, PE83 and PE84, respectively (Table 26). The haze and transmission before and after eraser abrasion tests are reported in Table 27.

**TABLE 26**

| HARDCOATED PET FILM | FORMULATION |
|---|---|
| PE82 | Formulation C |
| PE83 | Formulation D |
| PE84 | Formulation A2 |

**TABLE 27**

| HARDCOATED PET FILM | HAZE, % | | | TRANSMISSION, % | | |
|---|---|---|---|---|---|---|
| | Initial | Abraded | Δ Haze | Initial | Abraded | Δ Transmission |
| PE82 | 0.69 | 2.08 | 1.39 | 90.0 | 89.9 | -0.1 |
| PE83 | 0.78 | 3.17 | 2.39 | 90.1 | 90.1 | 0.0 |
| PE84 | 0.73 | 5.30 | 4.57 | 90.1 | 90.3 | 0.2 |

### PREPARATIVE EXAMPLES PE85 - PE94

Formulation A1 was used to make coating formulations in Table 28. In Table 28, SR611 was diluted to 32 wt. % solids in ethanol. Formulations in Table 28 were made by mixing the indicated amounts of ingredients at room temperature. The formulations were hand-coated on PC film using a #12 wire-wound rod (RD Specialties, nominal wet film thickness 1.08 mils (27.4 microns)). The coated PC films were allowed to dry at room temperature first and then dried at 80 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

The results of thermoforming of hardcoated PC films on lens mold following a described procedure are also reported in Table 29. Haze and transmission before and after eraser abrasion tests were measured on hardcoated PC films and results are reported in Table 30.

**TABLE 28**

| FORMULATION | Formulation A1, g | SR611, g of 32 wt. % solution) | 20 nm SiO₂, g | Ethanol, g | SiO₂ in Total Solids, wt. % | TOTAL SOLIDS, wt. % |
|---|---|---|---|---|---|---|
| PE85 | 4.50 | 0.25 | 0.00 | 0.00 | 0.0 | 32.1 |
| PE86 | 4.50 | 0.25 | 0.38 | 0.16 | 10.1 | 32.1 |
| PE87 | 4.50 | 0.25 | 0.85 | 0.35 | 20.1 | 32.1 |
| PE88 | 4.50 | 0.25 | 1.50 | 0.60 | 30.7 | 32.1 |
| PE89 | 4.50 | 0.25 | 2.30 | 0.92 | 40.4 | 32.1 |

**TABLE 29**

| HARDCOATED PC FILM | FORMULATION | THERMO FORMING RESULTS ON LENS MOLD |
|---|---|---|
| PE90 | PE85 | no cracking |
| PE91 | PE86 | cracks 20% up on edge, slight |
| PE92 | PE87 | cracks 20% up on edge, slight |
| PE93 | PE88 | cracks 25% up on edge |
| PE94 | PE89 | cracks 30% up on edge |

**TABLE 30**

| HARDCOATED PC FILM | HAZE, % | | | TRANSMISSION, % | | |
|---|---|---|---|---|---|---|
| | Initial | Abraded | Δ Haze | Initial | Abraded | Δ Transmission |
| PE90 | 0.19 | 9.83 | 9.64 | 91.3 | 91.1 | -0.2 |
| PE91 | 0.81 | 11.20 | 10.39 | 91.3 | 91.1 | -0.2 |
| PE92 | 0.55 | 12.60 | 12.05 | 91.4 | 91.2 | -0.2 |
| PE93 | 0.37 | 5.57 | 5.20 | 91.5 | 91.5 | 0 |
| PE94 | 0.27 | 4.45 | 4.18 | 91.6 | 91.6 | 0 |

### PREPARATIVE EXAMPLES PE95 - PE120

Formulation A1 was used to make coating formulations in Table 31. SR611 in Table 31 was diluted to 32 wt. % solids in ethanol.

PE96-PE100, PE101-PE104 were prepared using 30 min milled alpha alumina nanoparticle dispersion with a concentration of 61.1 wt. % solids in MEK. PE105, PE106 and PE107 were prepared using 10 min, 20 min, and 90 min milled alpha alumina nanoparticle dispersions, respectively. Alpha alumina nanoparticle dispersions used in PE105, PE106 and PE107 were 59.6 wt. %, 60.1 wt. % and 53.6 wt. % solids in MEK, respectively. PE95-PE107 were made by mixing different amounts of prepared solutions of ingredients at room temperature. The formulations were hand-coated on PC film using a #12 wire-wound rod (RD Specialties, nominal wet film thickness 1.08 mils (27.4 microns)). The coated PC films were allowed to dry at room temperature first and then dried at 80 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

The results of thermoforming of hardcoated PC films on lens mold following a described procedure are reported in Table 32. The haze and transmission of the hardcoated PC films before and after eraser abrasion tests were measured and results are reported in Table 33.

**TABLE 31**

| FORMULATION | FORMULATION A1, g | SR611 (32 WT. % SOLUTION IN ETHANOL), g | ALPHA ALUMINA NANOP ARTICLES DISPERSION IN MEK, g | ALUMINA SOLIDS/TOTAL SOLIDS, wt. % | ETHANOL, g | TOTAL SOLIDS, wt. % |
|---|---|---|---|---|---|---|
| PE95 | 2.25 | 0.13 | 0.000 | 0.0 | 0.00 | 32.1 |
| PE96 | 2.25 | 0.13 | 0.015 | 1.2 | 0.01 | 32.1 |
| PE97 | 2.25 | 0.13 | 0.032 | 2.5 | 0.03 | 32.1 |
| PE98 | 2.25 | 0.13 | 0.066 | 5.0 | 0.05 | 32.2 |
| PE99 | 2.25 | 0.13 | 0.094 | 7.0 | 0.08 | 32.2 |
| PE100 | 2.25 | 0.13 | 0.123 | 9.0 | 0.10 | 32.2 |
| PE101 | 2.25 | 0.13 | 0.139 | 10.0 | 0.12 | 32.2 |
| PE102 | 2.25 | 0.13 | 0.312 | 20.0 | 0.27 | 32.2 |
| PE103 | 2.25 | 0.13 | 0.535 | 30.0 | 0.48 | 32.1 |
| PE104 | 2.25 | 0.13 | 0.835 | 40.0 | 0.74 | 32.2 |
| PE105 | 2.25 | 0.13 | 0.033 | 2.5 | 0.02 | 32.2 |
| PE106 | 2.25 | 0.13 | 0.032 | 2.5 | 0.02 | 32.2 |
| PE107 | 2.25 | 0.13 | 0.037 | 2.5 | 0.02 | 32.2 |

**TABLE 32**

| HARDCOATED PC FILM | FORMULATION | THERMOFORMING RESULTS ON LENS MOLD |
|---|---|---|
| PE108 | PE95 | cracks 25% up on edge, slight |
| PE109 | PE96 | cracks 25% up on edge, slight |
| PE110 | PE97 | cracks 20% up on edge, very slight |
| PE111 | PE98 | cracks 10% up on edge, slight |
| PE112 | PE99 | Not thermoformed |
| PE113 | PE100 | Not thermoformed |
| PE114 | PE101 | cracks 25% up on edge, slight |
| PE115 | PE102 | cracks 20% up on edge, slight |
| PE116 | PE103 | cracks 25% up on edge |
| PE117 | PE104 | cracks 25% up on edge |
| PE118 | PE105 | cracks 20% up on edge |
| PE119 | PE106 | cracks 20% up on edge, slight |
| PE120 | PE107 | cracks 20% up on edge, slight |

**TABLE 33**

| HARDCOATED PC FILM | HAZE, % | | | TRANSMISSION, % | | |
|---|---|---|---|---|---|---|
| | Initial | Abraded | Δ Haze | Initial | Abraded | Δ Transmission |
| PE108 | 0.21 | 5.87 | 5.66 | 91.3 | 91.3 | 0.0 |
| PE109 | 2.13 | 7.60 | 5.47 | 91.1 | 91.0 | -0.1 |
| PE110 | 3.00 | 7.80 | 4.80 | 91.0 | 91.0 | 0.0 |
| PE111 | 6.16 | 11.20 | 5.04 | 90.7 | 90.7 | 0.0 |
| PE112 | 7.71 | 13.70 | 5.99 | 90.5 | 90.6 | 0.1 |
| PE113 | 11.00 | 17.40 | 6.40 | 90.4 | 90.3 | -0.1 |
| PE114 | 13.40 | 18.50 | 5.10 | 90.5 | 90.5 | 0.0 |
| PE115 | 33.90 | 41.50 | 7.60 | 89.6 | 89.7 | 0.1 |
| PE116 | 40.40 | 39.20 | -1.20 | 89.0 | 89.3 | 0.3 |
| PE117 | 37.80 | 40.30 | 2.50 | 88.4 | 88.9 | 0.5 |
| PE118 | 4.51 | 9.84 | 5.33 | 91.2 | 91.1 | -0.1 |
| PE119 | 3.28 | 8.89 | 5.61 | 91.3 | 91.2 | -0.1 |
| PE120 | 2.92 | 7.31 | 4.39 | 91.4 | 91.4 | 0.0 |

### PREPARATION OF FORMULATION E

Formulation E was made by adding 0.64 g of photoinitiator ESACURE ONE to 34.80 g of PE1 (80 wt. % of MEK), followed by dilution with 48 g of ethanol and 6.0 g of 1-methoxy-2-propanol. The resulting Formulation E was 31.8 wt. % solids.

### PREPARATIVE EXAMPLES PE121 - PE134

Formulation E was used to make coating formulations in Table 34. SR611 in Table 34 was diluted to 32 wt. % solids in ethanol. Alpha alumina nanoparticles (30 min milled) used in Table 34 were used at a concentration of 61.1 wt. % solids in MEK. PE121-PE127 were made by mixing different amounts of prepared solutions of ingredients shown in Table 34 at room temperature. The formulations were hand-coated on PC film using a #12 wire-wound rod (RD Specialties, nominal wet film thickness 1.08 mils (27.4 microns)). The coated PC films were allowed to dry at room temperature first, and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 30 feet/min (12.1 m/min).

The results of thermoforming of the hardcoated PC films on lens mold following a described procedure are reported in Table 35. The haze and transmission of the hardcoated PC films before and after eraser abrasion tests were measured and results are reported in Table 36.

**TABLE 34**

| FORMULATION | Formulation E (31.8 wt. %), g | SR611 (32wt. % of ethanol), g | ALPHA ALUMINA NANOPAR TICLES (61.1 wt. % of MEK), g | TEGORAD (10 wt. % of ethanol), g | | | HFPO-Urethane (30 wt. %), g | Alumina Solids in Total Solids, wt. % | Tegorad Solids in Total Solids, wt. % | HFPO Solids in Total Solids, wt. % | Total Solids , wt. % |
|---|---|---|---|---|---|---|---|---|---|---|---|
| | | | | TEG210 0 | TEG225 0 | TEG 2500 | | | | | |
| PE121 | 2.25 | 0.13 | 0.000 | 0.000 | 0.000 | 0.000 | 0.000 | 0.0 | 0.0 | 0.0 | 31.8 |
| PE122 | 2.25 | 0.13 | 0.032 | 0.000 | 0.000 | 0.000 | 0.000 | 2.5 | 0.0 | 0.0 | 32.3 |
| PE123 | 2.25 | 0.13 | 0.032 | 0.080 | 0.000 | 0.000 | 0.000 | 2.5 | 1.0 | 0.0 | 31.6 |
| PE124 | 2.25 | 0.13 | 0.032 | 0.000 | 0.080 | 0.000 | 0.000 | 2.5 | 1.0 | 0.0 | 31.6 |
| PE125 | 2.25 | 0.13 | 0.032 | 0.000 | 0.000 | 0.080 | 0.000 | 2.5 | 1.0 | 0.0 | 31.6 |
| PE126 | 2.25 | 0.13 | 0.032 | 0.000 | 0.000 | 0.000 | 0.025 | 2.5 | 0.0 | 1.0 | 32.3 |
| PE127 | 2.25 | 0.13 | 0.032 | 0.080 | 0.000 | 0.000 | 0.026 | 2.5 | 1.0 | 1.0 | 31.6 |

**TABLE 35**

| Hardcoated PC Film | Formulation | Thermoforming Results on Lens Mold |
|---|---|---|
| PE128 | PE121 | cracks 20% up on edge, slight |
| PE129 | PE122 | cracks on edge only |
| PE130 | PE123 | cracks 20% up on edge, slight |
| PE131 | PE124 | cracks 15% up on edge, slight |
| PE132 | PE125 | no cracking |
| PE133 | PE126 | cracks are slight and 100% covered by pit marks |
| PE134 | PE127 | cracks 20% up on edge, slight |

**TABLE 36**

| HARDCOATED PC FILM | HAZE, % | | | TRANSMISSION, % | | | STATIC WATER CONTACT ANGLE, ° |
|---|---|---|---|---|---|---|---|
| | Initial | Abraded | Δ Haze | Initial | Abraded | Δ Transmission | |
| PE128 | 0.15 | 4.57 | 4.42 | 91.5 | 91.7 | 0.2 | 67.3 ± 1.3 |
| PE129 | 3.29 | 7.18 | 3.89 | 91.3 | 91.2 | -0.1 | 68.2 ± 1.0 |
| PE130 | 3.13 | 7.39 | 4.26 | 91.3 | 91.3 | 0.0 | 97.8 ± 1.7 |
| PE131 | 3.35 | 8.31 | 4.96 | 91.3 | 91.3 | 0 | 98.2 ± 3.8 |
| PE132 | 3.60 | 10.80 | 7.20 | 91.3 | 91.0 | -0.3 | 99.1 ± 1.4 |
| PE133 | 3.22 | 9.39 | 6.17 | 91.4 | 91.3 | -0.1 | 103.6 ± 27 |
| PE134 | 2.96 | 9.63 | 6.67 | 91.3 | 91.3 | 0 | 109.6 ± 22 |

### HARDCOAT CONTAINING ALPHA ALUMINA AND ADDITIVES ON PET FILM (THERMOFORMED ON 1 MM EDGE PHONE MOLD):

### PREPARATIVE EXAMPLES PE135 - PE144

To make PE135-PE139, a master Formulation B was first prepared by adding 0.64 g of photoinitiator ESACURE ONE to 34.80 g of urethane acrylate PE1 (80 wt. % of MEK), followed by dilution with 54.0 g of MEK. The resulting Formulation C has 31.8 wt. % of solid.

Formulation B was used to make coating formulations in Table 37. SR611 in Table 37 was diluted to 32 wt. % solids in MEK. Alpha alumina nanoparticle dispersion was used at a concentration of 61.1 wt. % solids in MEK, which was prepared by milling commercially available alpha alumina particles following a described procedure. PE135-PE139 were made by mixing different amounts of prepared solutions of ingredients shown in Table 37 at room temperature. The formulations were hand-coated on PET film using a #12 wire-wound rod (RD Specialties, nominal wet film thickness 1.08 mils (27.4 microns)). The coated PET film were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The formulations and resulted hardcoated PET films are reported in Table 38. The eraser abrasion test was performed and results are reported in Table 39.

**TABLE 37**

| FORMULATION | Formulation B (32.1 wt. %), g | SR611 (32 wt. %), g | Alpha Alumina Nanoparticles (61.1 wt. %, 30 min milled), 6 | Tegorad 2100 (10 wt. %), g | HFPO-Urethane (30 wt. %), g | Alumina, wt. % of Total Solids | Tegorad, wt. % of Total Solids | HFPO, wt. % of Total Solids | Total Solids, wt. % |
|---|---|---|---|---|---|---|---|---|---|
| PE135 | 6.75 | 0.39 | 0.000 | 0.000 | 0.000 | 0.0 | 0.0 | 0.0 | 31.8 |
| PE136 | 6.75 | 0.39 | 0.096 | 0.000 | 0.000 | 2.5 | 0.0 | 0.0 | 32.3 |
| PE137 | 6.75 | 0.39 | 0.096 | 0.120 | 0.000 | 2.5 | 0.5 | 0.0 | 32.0 |
| PE138 | 6.75 | 0.39 | 0.096 | 0.000 | 0.038 | 2.5 | 0.0 | 0.5 | 32.3 |
| PE139 | 6.75 | 0.39 | 0.097 | 0.120 | 0.038 | 2.5 | 0.5 | 0.5 | 32.0 |

**TABLE 38**

| HARDCOATED PET FILM | FORMULATION |
|---|---|
| PE140 | PE135 |
| PE141 | PE136 |
| PE142 | PE137 |
| PE143 | PE138 |
| PE144 | PE139 |

**TABLE 39**

| HARDCOATED PET FILM | HAZE, % | | | TRANSMISSION, % | | |
|---|---|---|---|---|---|---|
| | Initial | Abraded | Δ Haze | Initial | Abraded | Δ Transmission |
| PE140 | 0.50 | 8.56 | 8.06 | 90.5 | 90.0 | -0.5 |
| PE141 | 3.21 | 8.51 | 5.30 | 89.9 | 90.0 | 0.1 |
| PE142 | 3.40 | 9.14 | 5.74 | 90.0 | 90.0 | 0.0 |
| PE143 | 3.42 | 8.84 | 5.42 | 90.0 | 90.0 | 0.0 |
| PE144 | 3.65 | 8.53 | 4.88 | 90.0 | 90.0 | 0.0 |

### POLYURETHANE COATINGS CONTAINING ALPHA ALUMINA ON PET FILMS:

### PREPARATIVE EXAMPLES PE145 - PE150

Alpha alumina nanoparticles were added to crosslinked polyurethane coatings. Alpha alumina nanoparticle dispersion was used at a concentration of 61.1 wt. % solids in MEK, which was prepared by milling commercially available alpha alumina particles following a described procedure. PE145-PE147 were made by mixing different amounts of prepared solutions of ingredients shown in Table 40 at room temperature. The formulations were hand-coated on PET film using a #12 wire-wound rod (RD Specialties, nominal wet film thickness 1.08 mils (27.4 microns)). After drying at room temperature, the coated samples were cured in an oven at 80 °C for 30 min. The formulations and resulted hardcoated PET films are reported in Table 41. The haze and transmission of the hardcoated PET films before and after eraser abrasion tests were measured and results are reported in Table 42.

**TABLE 40**

| FORMULATION | DESN100 (g, 100 wt. %) | Capa3031 (g, 100wt. %) | DBTDL (g, 3wt. % of 1,3-pentanedione) | ALPHA ALUMINA NANOP ARTICLES (g, 61.1wt. % of MEK, 30 min milled) | MEK (g) | Alumina Solid % of Total Solid | Total Solid % |
|---|---|---|---|---|---|---|---|
| PE145 | 3.873 | 2.029 | 0.098 | 0.000 | 12.450 | 0.0 | 32.0 |
| PE146 | 3.873 | 2.029 | 0.098 | 0.248 | 12.700 | 2.5 | 32.0 |
| PE147 | 3.873 | 2.029 | 0.098 | 0.510 | 12.900 | 5.0 | 32.0 |

**TABLE 41**

| Hardcoated PET Film | Formulation |
|---|---|
| PE148 | PE145 |
| PE149 | PE146 |
| PE150 | PE147 |

**TABLE 42**

| HARDCOATED PET FILM | HAZE, % | | | TRANSMISSION, % | | |
|---|---|---|---|---|---|---|
| | Initial | Abraded | Δ Haze | Initial | Abraded | Δ Transmission |
| PE148 | 0.40 | 10.40 | 10.00 | 90.0 | 90.0 | 0.0 |
| PE149 | 4.22 | 13.70 | 9.48 | 89.7 | 89.7 | 0.0 |
| PE150 | 7.23 | 13.10 | 5.87 | 89.3 | 89.4 | 0.1 |

### EPOXY COATINGS CONTAINING ALPHA ALUMINA ON PET FILMS:

### PREPARATIVE EXAMPLES PE151 - PE162

Alpha alumina nanoparticles were added to crosslinked epoxy coatings. Alpha alumina nanoparticle dispersion was used at a concentration of 61.1 wt. % solids in MEK, which was prepared by milling commercially available alpha alumina particles following a described procedure. PE151-PE156 were made by mixing different amounts of prepared solutions of ingredients shown in Table 43 at room temperature. The formulations were hand-coated on PET film using a #12 wire-wound rod (RD Specialties, Webster, New York, nominal wet film thickness 1.08 mils (27.4 microns)). The samples were first dried in air at room temperature and then cured using a UV processor equipped with a D-type bulb (Heraeus Noblelight America/Fusion UV Systems, Gaithersburg, Maryland) at 100% power under nitrogen purge at 30 feet/min (12.1 m/min). The UV cured samples were further cured in an oven at 100 oC for 30 min.

The formulations and resulted hardcoated PET films are reported in Table 44. The haze and transmission before and after eraser abrasion tests were measured and results are reported in Table 45.

**TABLE 43**

| FORMULATION | CELLOXIDE (100 wt. %), g | CAPA 3031 (100 wt. %), g | CYRACURE CPI-6976 (50 wt. % of propylene carbonate), g | ALPHA ALUMINA NANOP ARTICLES (61.1 wt. % of MEK, 30 min milled), g | MEK, g | ALUMINA, % of Total Solids | TOTAL SOLIDS, wt. % |
|---|---|---|---|---|---|---|---|
| PE151 | 4.000 | 0.000 | 0.040 | 0.000 | 8.50 | 0.00 | 32.06 |
| PE152 | 4.000 | 0.000 | 0.040 | 0.169 | 8.66 | 2.50 | 32.04 |
| PE153 | 4.000 | 0.000 | 0.040 | 0.346 | 8.80 | 5.00 | 32.09 |
| PE154 | 2.800 | 1.200 | 0.040 | 0.000 | 8.50 | 0.00 | 32.06 |
| PE155 | 2.800 | 1.200 | 0.040 | 0.169 | 8.66 | 2.50 | 32.04 |
| PE156 | 2.800 | 1.200 | 0.040 | 0.346 | 8.80 | 5.00 | 32.09 |

**TABLE 44**

| HARDCOATED PET FILM | FORMULATION |
|---|---|
| PE157 | PE151 |
| PE158 | PE152 |
| PE159 | PE153 |
| PE160 | PE154 |
| PE161 | PE155 |
| PE162 | PE156 |

**TABLE 45**

| HARDCOATED PET FILM | HAZE, % | | | TRANSMISSION, % | | |
|---|---|---|---|---|---|---|
| | Initial | Abraded | Δ Haze | Initial | Abraded | Δ Transmission |
| PE157 | 0.58 | 34.0 | 33.42 | 90.3 | 90.3 | 0.0 |
| PE158 | 3.68 | 35.5 | 31.82 | 89.9 | 90.1 | 0.2 |
| PE159 | 6.28 | 37.6 | 31.32 | 89.7 | 89.7 | 0.0 |
| PE160 | 1.15 | 51.9 | 50.75 | 90.3 | 90.5 | 0.2 |
| PE161 | 3.70 | 51.4 | 47.70 | 90 | 90.1 | 0.1 |
| PE162 | 6.94 | 50.4 | 43.46 | 89.7 | 89.9 | 0.2 |

### LAMINATED MULTILAYER ARTICLES (LMA):

The optically clear adhesive used in making the multilayer articles containing hardcoats was prepared as follows. 80 g of 2-ethylhexyl acrylate (Sigma-Aldrich, St. Louis, Missouri), 10 g of 2ethylhexyl methacrylate (Sigma-Aldrich), 4 g of hydroxyethyl acrylate (Kowa America, New York, New York), 6 g of acrylamide (Zibo Xinye Chemical, Zibo City, China), 0.15 g of thermal initiator Vazo52 (Dupont, Wilmington, DE), 0.08 g of Karenz MT PE1 (Showa Denko America, New York, New York), and 60 g of MEK were charged to a reactor vessel. This vessel was sparged with nitrogen for 5 minutes, sealed, and then placed in an agitated water bath at 60°C for 20 hours. The generated solution polymer was then cooled, sparged with air for 10 minutes, and 0.3 g of isocyanatoethyl methacrylate (Showa Denko America) was added to the vessel. The vessel was again sealed and heated to 50°C for 12 hours to allow for the IEM to react with pendant OH functionality on the formed acrylic polymer. Following this functionalization, 0.4 g of Irgacure 184 (BASF, Florham Park, New Jersey), 1 g of SR351 (Sartomer Co,, Exton, Pennsylvania), 25 grams of 2-methoxypropanol (Alfa Aesar, Ward Hill, Massachusetts), and 3.3 grams of methanol were added to the vessel and mixed for 1 hour.

The adhesive was applied on PET film using a notched bar coater with the slot size set between size 0.003 in and 0.004 in (0.08 mm-0.10 mm) followed by baking in an oven for 10 min at 70 °C. The resulting adhesive coated PET film was used in making the multilayer articles along with the hardcoated PET film. The thickness of the adhesive on PET film was determined as 135.7±1.5 µm using a digital thickness gauge after photo curing of the multilayer article.

### PREPARATIVE EXAMPLES 163 TO 164

Four different hardcoats were applied on PET film for making the multilayer articles.

Formulation B was used to make coating formulations in Table 46. SR611 in Table 46 was diluted to 32 wt. % solids in MEK. Alpha alumina nanoparticle dispersion was used at a concentration of 61.1 wt. % solids in MEK, which was prepared by milling commercially available alpha alumina particles following a described procedure. PE139 and PE163 were made by mixing different amounts of prepared solutions of ingredients shown in Table 46 at room temperature. The formulations were hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The formulations and resulted hardcoated PET films as well as eraser abrasion test results are reported in Table 47.

**TABLE 46**

| FORMULATION | FORMULATION B (32.1 wt. %), g | SR611 (32 wt. %), g | ALPHA ALUMINA NANOPARTICLES (61.1 wt. %, 30 min milled), g | TEGORAD 2100 (10 wt. %), g | HFPO-Urethane (30 wt. %), g | ALUMINA, wt. % of Total Solids | TEGORAD Solids, wt. % of Total Solids | HFPO, wt. % of Total Solids | TOTAL SOLIDS, wt. % |
|---|---|---|---|---|---|---|---|---|---|
| PE139 | 6.75 | 0.39 | 0.097 | 0.120 | 0.038 | 2.5 | 0.5 | 0.5 | 32.0 |
| PE163 | 2.25 | 0.13 | 0 | 0.08 | 0.025 | 0 | 1.0 | 0.96 | 31.4 |

**TABLE 47**

| Hardcoated PET Film | Formulation | Haze (%) | | | Transmission (%) | | |
|---|---|---|---|---|---|---|---|
| | | Initial | Abraded | Δ Haze | Initial | Abraded | Δ Transmission |
| PE144 | PE139 | 3.65 | 8.53 | 4.88 | 90.0 | 90.0 | 0.0 |
| PE164 | PE163 | 0.58 | 8.44 | 7.86 | 90.2 | 90.3 | 0.1 |

### PREPARATION OF FORMULATION F

Formulation F was first prepared by adding 0.32 g of photoinitiator ESACURE ONE to 17.40 g of the mixture of PE2 (80 wt. % of MEK) and 0.16 g of Tegorad 2100, followed by dilution with 27 g of MEK. The resulting Formulation D has 32.1 wt. % of solids.

### PREPARATIVE EXAMPLES 165 AND 166

Formulation F was used to make PE165 in combination with other listed ingredients in Table 48. SR611 was diluted to 32 wt. % solids in MEK. Tegorad 2100 was diluted to 10 wt. % solids in MEK and HFPO-Urethane had 30 wt. % solids in MEK. PE165 was prepared at room temperature and hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The PET film coated with PE165 is labeled as PE166. The eraser abrasion test was performed following the described procedure and results are reported in Table 49.

**TABLE 48**

| FORMULATION | FORMULATION F (32.1 wt. %), g | SR611 (32 wt. %), g | TEGORAD 2100 (10 wt. %), g | HFPO-Urethane (30 wt. %), g | TEGORAD/HFPO % of Total Solids | TOTAL SOLIDS, wt. % |
|---|---|---|---|---|---|---|
| PE165 | 9.0 | 0.52 | 0.32 | 0.1 | 1.99 | 31.4 |

**TABLE 49**

| HARDCOATED PET FILM | FORMULATION | HAZE, % | | | TRANSMISSION, % | | |
|---|---|---|---|---|---|---|---|
| | | Initial | Abraded | Δ Haze | Initial | Abraded | Δ Transmission |
| PE166 | PE165 | 0.94 | 6.4 | 5.46 | 90.3 | 90.2 | -0.1 |

### PREPARATION OF FORMULATION G

Formulation G was prepared by adding 0.32 g of photoinitiator ESACURE ONE to the mixture of 17.40 g of PE3 (80 wt. % of MEK) and 0.16 g of Tegorad 2100, followed by dilution with 27 g of MEK. The resulting Formulation G has 32.1 wt. % of solid.

### PREPARATIVE EXAMPLES PE167-PE170

Formulation G was used to make PE167 in combination with other listed ingredients in Table 50. SR611 was diluted to 32 wt. % solids in MEK. Tegorad 2100 was diluted to 10 wt. % solids in MEK and HFPO-Urethane had 30 wt. % solids in MEK. PE167 was prepared at room temperature and hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The PET film coated with PE167 is labeled as PE168. The eraser abrasion test was performed following the described procedure and results are reported in Table 51.

**TABLE 50**

| FORMULATION | FORMULATION G (32.1 wt. %), g | SR611 (32 wt. %), g | TEGORAD 2100 (10 wt. %), g | HFPO-Urethane (30 wt. %), g | TEGORAD/HFPO % of Total Solids | TOTAL SOLIDS, wt. % |
|---|---|---|---|---|---|---|
| PE167 | 9.0 | 0.52 | 0.32 | 0.1 | 1.99 | 31.4 |

**TABLE 51**

| HARDCOATED PET FILM | FORMULATION | HAZE, % | | | TRANSMISSION, % | | |
|---|---|---|---|---|---|---|---|
| | | Initial | Abraded | Δ Haze | Initial | Abraded | Δ Transmission |
| PE168 | PE167 | 0.96 | 7.21 | 6.25 | 90.4 | 90.4 | 0.0 |

**TABLE 52**

| PREPARATIVE EXAMPLE | DESCRIPTION | ISOCYANATE, g | HEA, g | PETA, g | MEK, g | AVERAGE (METH)ACRYLATE FUNCTIONALITY OF URETHANE (METH)ACRYLATE COMPOUND |
|---|---|---|---|---|---|---|
| PE169 | 1.0 DESN100 + 0.33 HEA + 0.67 PETA | DESN100, 270.57 | 111.93 | 217.5 | 150 | 8.4 |
| PE170 | 1.0 DESN100 + 0.67 HEA + 0.33 PETA | DESN100, 213.18 | 44.09 | 342.73 | 150 | 6.0 |

### PREPARATION OF FORMULA H

To make PE171, Formulation H was first prepared by adding 0.32 g of photoinitiator ESACURE ONE to the mixture of 17.40 g of PE169 (80 wt. % of MEK) and 0.16 g of Tegorad 2100, followed by dilution with 27 g of MEK. The resulting Formulation H has 32.1 wt. % of solid.

### PREPARATIVE EXAMPLES PE171 and PE172

Formulation H was used to make PE171 in combination with other listed ingredients in Table 53. SR611 was diluted to 32 wt. % solids in MEK. Tegorad 2100 was diluted to 10 wt. % solids in MEK and HFPO-Urethane had 30 wt. % solids in MEK. PE171 was prepared at room temperature and hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The PET film coated with PE171 is labeled as PE172. The eraser abrasion test was performed following the described procedure and results are reported in Table 54.

**TABLE 53**

| FORMULATION | FORMULATION H (32.1 wt. %), g | SR611 (32 wt. %), g | TEGORAD 2100 (10 wt. %), g | HFPO-Urethane (30 wt. %), g | TEGORAD/HFPO % of Total Solids | TOTAL SOLIDS, wt. % |
|---|---|---|---|---|---|---|
| PE171 | 18.00 | 1.04 | 0.640 | 0.200 | 2.81 | 31.4 |

**TABLE 54**

| HARDCOATED PET FILM | FORMULATION | HAZE, % | | | TRANSMISSION, % | | |
|---|---|---|---|---|---|---|---|
| | | Initial | Abraded | Δ Haze | Initial | Abraded | Δ Transmission |
| PE172 | PE171 | 1.15 | 3.25 | 2.10 | 90.2 | 90.1 | -0.1 |

### PREPARATION OF FORMULA I

Formulation I was prepared by adding 0.32 g of photoinitiator ESACURE ONE to the mixture of 17.40 g of PE170 (80 wt. % of MEK) and 0.16 g of Tegorad 2100, followed by dilution with 27 g of MEK. The resulting Formulation I has 32.1 wt. % of solid.

### PREPARATIVE EXAMPLES PE173 and PE174

Formulation I was used to make PE173 in combination with other listed ingredients in Table 55. SR611 was diluted to 32 wt. % solids in MEK. Tegorad 2100 was diluted to 10 wt. % solids in MEK and HFPO-Urethane had 30 wt. % solids in MEK. PE173 was prepared at room temperature and hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The PET film coated with PE173 is labeled as PE174. The eraser abrasion test was performed following the described procedure and results are reported in Table 56.

**TABLE 55**

| FORMULATION | FORMULATION I (32.1 wt. %), g | SR611 (32 wt. %), g | TEGORAD 2100 (10 wt. %), g | HFPO-Urethane (30 wt. %), g | TEGORAD/HFPO % of Total Solids | TOTAL SOLIDS, wt. % |
|---|---|---|---|---|---|---|
| PE173 | 18.00 | 1.04 | 0.640 | 0.200 | 2.81 | 31.4 |

**TABLE 56**

| HARDCOATED PET FILM | FORMULATION | HAZE, % | | | TRANSMISSION, % | | |
|---|---|---|---|---|---|---|---|
| | | Initial | Abraded | Δ Haze | Initial | Abraded | Δ Transmission |
| PE174 | PE173 | 0.86 | 7.07 | 6.21 | 90.0 | 90.0 | 0 |

### PREPARATIVE EXAMPLES PE175 and PE176

Formulation A2 was used to make PE175 in combination with other listed ingredients in Table 57. SR611 was diluted to 32 wt. % solids in MEK. Tegorad 2100 was diluted to 10 wt. % solids in MEK and HFPO-Urethane had 30 wt. % solids in MEK. PE175 was prepared at room temperature and hand-coated on PET film using a #12 wire-wound rod (RD Specialties, nominal wet film thickness 1.08 mils (27.4 microns)). The coated PET films were allowed to dry at room temperature first and then dried at 90 °C in an oven for 1 min. The dried samples were cured using a UV processor equipped with an H-type bulb (500 W, Heraeus Noblelight America/Fusion UV Systems, Gaithersburg, Maryland) at 100% power under nitrogen purge at 50 feet/min (15.2 m/min). The PET film coated with PE175 is labeled as PE176. The eraser abrasion test was performed following the described procedure and results are reported in Table 58.

**TABLE 57**

| FORMULATION | FORMULATION A2 (32.1 wt. %), g | SR611 (32 wt. %), g | TEGORAD 2100 (10 wt. %), g | HFPO-Urethane (30 wt. %), g | TEGORAD/HFPO % of Total Solids | TOTAL SOLIDS, wt. % |
|---|---|---|---|---|---|---|
| PE175 | 18.00 | 1.04 | 0.640 | 0.200 | 2.81 | 31.4 |

**TABLE 58**

| HARDCOATED PET FILM | FORMULATION | HAZE, % | | | TRANSMISSION, % | | |
|---|---|---|---|---|---|---|---|
| | | Initial | Abraded | Δ Haze | Initial | Abraded | Δ Transmission |
| PE176 | PE175 | 1.42 | 4.25 | 2.83 | 90.1 | 90.3 | 0.2 |

### EXAMPLES 1 to 14

Two different multilayer articles, Construction 1 and Construction 2, were laminated by hand using the hardcoated PET film (PE144, PE164, PE166 and PE168), adhesive coated PET film and a release liner. Construction 1 had four layers of materials from the top surface to the bottom, namely hardcoat, PET film, adhesive and release liner. Construction 2 had six layers of materials from the top surface to the bottom, namely hardcoat, PET film, adhesive, PET film, adhesive and release liner.

To make construction 1, the release liner was coated with adhesive using a notched bar coater with the slot size set between 0.003 in and 0.004 in (0.08 mm-0.10 mm) followed by baking in an oven for 10 min at 70 °C. The PET side of the hardcoated PET film was laminated onto the adhesive coated release liner using a rubber hand roller. Air bubble and defects were carefully avoided by applying tension on the hardcoated PET film during lamination. The adhesive of laminated articles was cured with 2 passes using a UV processor equipped with a D-type bulb (600W, Heraeus Noblelight America/Fusion UV Systems, Gaithersburg, Maryland) at 50% power in air at 15 feet/min (4.6 m/min). The curing was performed through the release liner.

To make construction 2, the adhesive was first coated on PET film using a notched bar coater with the slot size set between 0.003 in and 0.004 in (0.08 mm-0.10 mm) followed by baking in an oven for 10 min at 70 °C. The PET side of the hardcoated PET film was laminated onto the adhesive coated PET film. Air bubble and defects were carefully avoided by applying tension on the hardcoated PET film during lamination. This results in an intermediate article hardcoat/PET/adhesive/PET. The release liner was coated with adhesive using a notched bar coater with the slot size set between 0.003 in and 0.004 in (0.08 mm-0.10 mm) followed by baking in an oven for 10 min at 70 °C. The PET side of the hardcoat/PET/adhesive/PET was laminated onto the adhesive coated release liner using a rubber hand roller. Air bubble and defects were carefully avoided by applying tension on the hardcoat/PET/adhesive/PET during lamination. This results in Construction 2. The adhesive of laminated articles was cured with 2 passes using a UV processor equipped with a D-type bulb (600W, Heraeus Noblelight America/Fusion UV Systems, Gaithersburg, Maryland) at 50% power in air at 15 feet/min (4.6 m/min). The curing was performed through the release liner.

Thermoforming of multilayer articles of Construction 1 and Construction 2 was performed on 1 mm edge aluminum phone mold following a described procedure. The hardcoated PET films used in making the multilayer articles were also thermoformed under the same conditions. The thermoforming results are reported in Table 59.

**TABLE 59**

| EXAMPLE | HARD COATED PET FILM | MULTILAYER CONSTRUCTION | THERMOFORMING ON 1 MM EDGE ALUMINUM PHONE MOLD | NOTES |
|---|---|---|---|---|
| Comparative Example CEA | PE144 | | cracks at edge only | hard coated PET |
| EX1 | PE144 | Construction 1 | cracks at edge only | replicate 1 |
| EX1 | PE144 | Construction 1 | cracks at edge only | replicate 2 |
| EX2 | PE144 | Construction 2 | no cracks | replicate 1 |
| EX2 | PE144 | Construction 2 | no cracks | replicate 2 |
| Comparative Example CEB | PE164 | | cracks across surface | hardcoated PET |
| EX3 | PE164 | Construction 1 | no cracks | replicate 1 |
| EX3 | PE164 | Construction 1 | cracks at edge only | replicate 2 |
| EX4 | PE164 | Construction 2 | no cracks | replicate 1 |
| Comparative Example CEC | PE166 | Construction 1 | cracks across surface | replicate 1 |
| Comparative Example CEC | PE166 | Construction 1 | cracks at edge only | replicate 2 |
| Comparative Example CED | PE166 | Construction 2 | cracks across surface | replicate 1 |
| Comparative Example CEE | PE168 | | cracks at edge only | hardcoated PET |
| EX5 | PE168 | Construction 1 | cracks at edge only | replicate 1 |
| EX5 | PE168 | Construction 1 | cracks at edge only | replicate 2 |
| EX6 | PE168 | Construction 2 | cracks across surface | replicate 1 |
| EX6 | PE168 | Construction 2 | cracks across surface | replicate 2 |

| Comparative Example CEF | PE172 | | cracks at edge only | hardcoated PET |
|---|---|---|---|---|
| EX7 | PE172 | Construction 1 | cracks at edge only | replicate 1 |
| EX7 | PE172 | Construction 1 | cracks at edge only | replicate 2 |
| EX7 | PE172 | Construction 1 | cracks at edge only | replicate 3 |
| EX8 | PE172 | Construction 2 | cracks at edge only | replicate 1 |
| EX8 | PE172 | Construction 2 | cracks at edge only | replicate 2 |
| EX8 | PE172 | Construction 2 | cracks at edge only | replicate 3 |
| Comparative Example CEG | PE174 | | cracks at edge only | hardcoated PET |
| EX9 | PE174 | Construction 1 | no cracks | replicate 1 |
| EX9 | PE174 | Construction 1 | no cracks | replicate 2 |
| EX9 | PE174 | Construction 1 | no cracks | replicate 3 |
| EX10 | PE174 | Construction 2 | no cracks | replicate 1 |
| EX10 | PE174 | Construction 2 | no cracks | replicate 2 |
| EX10 | PE174 | Construction 2 | no cracks | replicate 3 |
| Comparative Example CEH | PE176 | | cracks at edge only | hardcoated PET |
| EX11 | PE176 | Construction 1 | cracks at edge only | replicate 1 |
| EX11 | PE176 | Construction 1 | cracks at edge only | replicate 2 |
| EX11 | PE176 | Construction 1 | cracks at edge only | replicate 3 |
| EX12 | PE176 | Construction 2 | no cracks | replicate 1 |
| EX12 | PE176 | Construction 2 | no cracks | replicate 2 |
| EX12 | PE176 | Construction 2 | no cracks | replicate 3 |

The preceding description, given in order to enable one of ordinary skill in the art to practice the claimed disclosure, is not to be construed as limiting the scope of the disclosure, which is defined by the claims and all equivalents thereto.

## Claims

1. A protective cover for an electronic device, the protective cover comprising:
a first unitary thermoplastic polymer film having first and second opposed major surfaces;
a low surface energy abrasion resistant layer disposed on the first major surface of the first unitary thermoplastic polymer film, wherein the low surface energy abrasion resistant layer comprises an at least partially cured curable composition, the curable composition comprising components:
a) 70 to 95 weight percent of urethane (meth)acrylate compound having an average (meth)acrylate functionality of 3 to 9, based on the total weight of components a) to d);
b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
c) 0.5 to 2 weight percent of silicone (meth)acrylate, based on the total weight of components a) to d); and
d) optional effective amount of photoinitiator;
a first adhesive layer proximate and securely bonded to the second major surface of the first unitary thermoplastic polymer film,
wherein the protective cover comprises a central planar section having first and second opposed major surfaces, wherein the central planar section is bounded by at least two linear side sections, wherein the at least two linear side sections extend out of plane from the central planar section to define inner and outer surfaces of the protective cover, and wherein the low surface energy abrasion resistant layer is disposed on the outer surface of the central planar section.

2. The protective cover for an electronic device of claim 1, further comprising:
a second unitary thermoplastic polymer film having two opposed major surfaces, the second unitary thermoplastic polymer film being proximate and securely bonded to the first adhesive layer; and
a second adhesive layer proximate and securely bonded to the second unitary thermoplastic polymer film opposite the first adhesive layer.

3. The protective cover for an electronic device of any one of claims 1 or 2, wherein the protective cover is thermoformed.

4. The protective cover for an electronic device of any one of claims 1 to 3, wherein the component d) is present in the curable composition.

5. The protective cover for an electronic device of any one of claims 1 to 4, wherein the component a) the urethane (meth)acrylate compound includes at least one of an isocyanurate ring or a biuret group.

6. The protective cover for an electronic device of any one of claims 1 to 5, wherein the curable composition comprises alpha alumina particles having a Dv50 of from 0.1 to 1 micron.

7. The protective cover for an electronic device of claim 6, wherein the alpha alumina particles have a Dv50 of from 0.2 to 0.3 micron.

8. A method of making a protective cover for an electronic device, the method comprising:
thermoforming a composite film to provide a protective cover comprising a central planar section having first and second opposed major surfaces, wherein the central planar section is bounded by at least two linear side sections, and wherein the composite film comprises:
a first unitary thermoplastic polymer film having first and second opposed major surfaces;
a low surface energy abrasion resistant layer disposed on the first major surface of the first unitary thermoplastic polymer film, wherein the low surface energy abrasion resistant layer comprises an at least partially cured curable composition, the curable composition comprising components:
a) 70 to 95 weight percent of urethane (meth)acrylate compound having an average (meth)acrylate functionality of 3 to 9, based on the total weight of components a) to d);
b) 2 to 20 weight percent (meth)acrylate monomer having a (meth)acrylate functionality of 1 to 2, based on the total weight of components a) to d), wherein the (meth)acrylate monomer is not a urethane (meth)acrylate compound;
c) 0.5 to 2 weight percent of silicone (meth)acrylate, based on the total weight of components a) to d); and
d) optional effective amount of photoinitiator; and
a first adhesive layer proximate and securely bonded to the second major surface of the first unitary thermoplastic polymer film,
wherein the at least two linear side sections extend out of plane from the central planar section to define inner and outer surfaces of the protective cover, and wherein the low surface energy abrasion resistant layer is disposed on at least a portion of the outer surface.

9. The method of claim 8, wherein the composite film further comprises a releasable liner releasably adhered to first adhesive layer.

10. The method of claim 8, wherein the composite film further comprises:
a second unitary thermoplastic polymer film having two opposed major surfaces, the second unitary thermoplastic polymer film being proximate and securely bonded to the first adhesive layer; and
a second adhesive layer proximate and securely bonded to the second unitary thermoplastic polymer film opposite the first adhesive layer.

11. The method of claim 10, wherein the component d) is present in the curable composition.

12. The method of claim 11, wherein the component d) comprises a free-radical photoinitiator.

13. The method of any one of claims 10 to 12, wherein the curable composition comprises alpha alumina particles having a Dv50 of from 0.1 to 1 micron.

14. The method of claim 13, wherein the alpha alumina particles have a Dv50 of from 0.2 to 0.3 micron.

15. The method of claim 13 or 14, wherein the at least partially cured curable composition comprises from 0.15 to 9 weight percent of the alpha alumina particles.

## Patentansprüche

1. Eine Schutzabdeckung für eine elektronische Vorrichtung, wobei die Schutzabdeckung umfasst:
eine erste einheitliche thermoplastische Polymerfolie, die eine erste und eine zweite Hauptoberfläche aufweist, die einander gegenüberliegen;
eine abriebfeste Schicht mit niedriger Oberflächenenergie, die auf der ersten Hauptoberfläche der ersten einheitlichen thermoplastischen Polymerfolie angeordnet ist, wobei die abriebfeste Schicht mit niedriger Oberflächenenergie eine zumindest teilweise gehärtete härtende Zusammensetzung umfasst, wobei die härtende Zusammensetzung folgende Bestandteile umfasst:
a) 70 bis 95 Gewichtsprozent einer Urethan(meth)acrylatverbindung mit einer durchschnittlichen (Meth)acrylat-Funktionalität von 3 bis 9, bezogen auf das Gesamtgewicht der Bestandteile a) bis d);
b) 2 bis 20 Gewichtsprozent (Meth)acrylatmonomer mit einer (Meth)acrylatfunktionalität von 1 bis 2, bezogen auf das Gesamtgewicht der Bestandteile a) bis d), wobei das (Meth)acrylatmonomer keine Urethan(meth)acrylatverbindung ist;
c) 0,5 bis 2 Gewichtsprozent Silikon(meth)acrylat, bezogen auf das Gesamtgewicht der Bestandteile a) bis d); und
d) wahlweise eine wirksame Menge Photoinitiator;
eine erste Klebstoffschicht nahe der zweiten Hauptoberfläche der ersten einheitlichen thermoplastischen Polymerfolie und fest damit verbunden,
wobei die Schutzabdeckung einen zentralen planaren Abschnitt umfasst, der eine erste und eine zweite Hauptoberfläche aufweist, die einander gegenüberliegen, wobei der zentrale planare Abschnitt durch mindestens zwei lineare Seitenabschnitte begrenzt ist, wobei sich die mindestens zwei linearen Seitenabschnitte aus der Ebene von dem zentralen planaren Abschnitt erstrecken, um eine Innen- und eine Außenfläche der Schutzabdeckung zu definieren, und wobei die abriebfeste Schicht mit niedriger Oberflächenenergie auf der Außenfläche des zentralen planaren Abschnitts angeordnet ist.

2. Die Schutzabdeckung für eine elektronische Vorrichtung nach Anspruch 1, ferner umfassend:
eine zweite einheitliche thermoplastische Polymerfolie, die zwei einander gegenüberliegende Hauptoberflächen aufweist, wobei sich die zweite einheitliche thermoplastische Polymerfolie nahe der ersten Klebstoffschicht befindet und fest damit verbunden ist; und
eine zweite Klebstoffschicht nahe der zweiten einheitlichen thermoplastischen Polymerfolie gegenüber der ersten Klebstoffschicht und fest damit verbunden.

3. Die Schutzabdeckung für eine elektronische Vorrichtung nach einem der Ansprüche 1 oder 2, wobei die Schutzabdeckung thermogeformt ist.

4. Die Schutzabdeckung für eine elektronische Vorrichtung nach einem der Ansprüche 1 bis 3, wobei der Bestandteil d) in der härtenden Zusammensetzung vorliegt.

5. Die Schutzabdeckung für eine elektronische Vorrichtung nach einem der Ansprüche 1 bis 4, wobei der Bestandteil a) die Urethan(meth)acrylatverbindung mindestens eines von einem Isocyanuratring oder einer Biuretgruppe enthält.

6. Die Schutzabdeckung für eine elektronische Vorrichtung nach einem der Ansprüche 1 bis 5, wobei die härtende Zusammensetzung alpha-Aluminiumoxidteilchen mit einem Dv50-Wert von 0,1 bis 1 Mikrometer aufweist.

7. Die Schutzabdeckung für eine elektronische Vorrichtung nach Anspruch 6, wobei die alpha-Aluminiumoxidteilchen einen Dv50-Wert von 0,2 bis 0,3 Mikrometer aufweisen.

8. Ein Verfahren zum Herstellen einer Schutzabdeckung für eine elektronische Vorrichtung, wobei das Verfahren umfasst: Thermoformen einer Verbundfolie, um eine Schutzabdeckung bereitzustellen, die einen zentralen planaren Abschnitt mit einer ersten und einer zweiten Hauptoberfläche, die einander gegenüberliegen, umfasst, wobei der zentrale planare Abschnitt durch mindestens zwei lineare Seitenabschnitte begrenzt ist, und wobei die Verbundfolie umfasst:
eine erste einheitliche thermoplastische Polymerfolie, die eine erste und eine zweite Hauptoberfläche aufweist, die einander gegenüberliegen;
eine abriebfeste Schicht mit niedriger Oberflächenenergie, die auf der ersten Hauptoberfläche der ersten einheitlichen thermoplastischen Polymerfolie angeordnet ist, wobei die abriebfeste Schicht mit niedriger Oberflächenenergie eine zumindest teilweise gehärtete härtende Zusammensetzung umfasst, wobei die härtende Zusammensetzung folgende Bestandteile umfasst:
a) 70 bis 95 Gewichtsprozent einer Urethan(meth)acrylatverbindung mit einer durchschnittlichen (Meth)acrylat-Funktionalität von 3 bis 9, bezogen auf das Gesamtgewicht der Bestandteile a) bis d);
b) 2 bis 20 Gewichtsprozent (Meth)acrylatmonomer mit einer (Meth)acrylatfunktionalität von 1 bis 2, bezogen auf das Gesamtgewicht der Bestandteile a) bis d), wobei das (Meth)acrylatmonomer keine Urethan(meth)acrylatverbindung ist;
c) 0,5 bis 2 Gewichtsprozent Silikon(meth)acrylat, bezogen auf das Gesamtgewicht der Bestandteile a) bis d); und
d) wahlweise eine wirksame Menge Photoinitiator; und
eine erste Klebstoffschicht nahe der zweiten Hauptoberfläche der ersten einheitlichen thermoplastischen Polymerfolie und fest damit verbunden,
wobei sich die mindestens zwei linearen Seitenabschnitte aus der Ebene von dem zentralen planaren Abschnitt erstrecken, um eine Innen- und eine Außenfläche der Schutzabdeckung zu definieren, und wobei die abriebfeste Schicht mit niedriger Oberflächenenergie auf mindestens einem Abschnitt der Außenfläche angeordnet wird.

9. Das Verfahren nach Anspruch 8, wobei die Verbundfolie ferner eine ablösbare Schutzfolie umfasst, die ablösbar an der ersten Klebstoffschicht haftet.

10. Das Verfahren nach Anspruch 8, wobei die Verbundfolie ferner umfasst:
eine zweite einheitliche thermoplastische Polymerfolie, die zwei einander gegenüberliegende Hauptoberflächen aufweist, wobei sich die zweite einheitliche thermoplastische Polymerfolie nahe der ersten Klebstoffschicht befindet und fest damit verbunden ist; und
eine zweite Klebstoffschicht nahe der zweiten einheitlichen thermoplastischen Polymerfolie gegenüber der ersten Klebstoffschicht und fest damit verbunden.

11. Das Verfahren nach Anspruch 10, wobei der Bestandteil d) in der härtenden Zusammensetzung vorliegt.

12. Das Verfahren nach Anspruch 11, wobei der Bestandteil d) einen radikalischen Photoinitiator umfasst.

13. Das Verfahren nach einem der Ansprüche 10 bis 12, wobei die härtende Zusammensetzung alpha-Aluminiumoxidteilchen mit einem Dv50-Wert von 0,1 bis 1 Mikrometer umfasst.

14. Das Verfahren nach Anspruch 13, wobei die alpha-Aluminiumoxidteilchen einen Dv50-Wert von 0,2 bis 0,3 Mikrometer aufweisen.

15. Das Verfahren nach Anspruch 13 oder 14, wobei die zumindest teilweise gehärtete härtende Zusammensetzung von 0,15 bis 9 Gewichtsprozent alpha-Aluminiumoxidteilchen umfasst.

## Revendications

1. Couvercle de protection pour un dispositif électronique, le couvercle de protection comprenant :
un premier film polymère thermoplastique unitaire ayant des première et seconde surfaces principales opposées ;
une couche résistante à l'abrasion à faible énergie de surface agencée sur la première surface principale du premier film polymère thermoplastique unitaire, dans lequel la couche résistante à l'abrasion à faible énergie de surface comprend une composition durcissable au moins partiellement durcie, la composition durcissable comprenant les composants :
a) 70 à 95 pour cent en poids d'un composé (méth)acrylate d'uréthane ayant une fonctionnalité (méth)acrylate moyenne de 3 à 9, en fonction du poids total des composants a) à d) ;
b) 2 à 20 pour cent en poids de monomère (méth)acrylate ayant une fonctionnalité (méth)acrylate de 1 à 2, en fonction du poids total des composants a) à d), dans lequel le monomère (méth)acrylate n'est pas un composé (méth)acrylate d'uréthane ;
c) 0,5 à 2 pour cent en poids de (méth)acrylate de silicone, en fonction du poids total des composants a) à d) ; et
d) une quantité efficace facultative d'un photoinitiateur ;
une première couche adhésive à proximité de et solidement liée à la seconde surface principale du premier film polymère thermoplastique unitaire,
dans lequel le couvercle de protection comprend une section plane centrale ayant des première et seconde surfaces principales opposées, dans lequel la section plane centrale est délimitée par au moins deux sections latérales linéaires, dans lequel les au moins deux sections latérales linéaires s'étendent hors du plan par rapport à la section plane centrale pour définir des surfaces interne et externe du couvercle de protection, et dans lequel la couche résistante à l'abrasion à faible énergie de surface est agencée sur la surface externe de la section plane centrale.

2. Couvercle de protection pour un dispositif électronique selon la revendication 1, comprenant en outre :
un second film polymère thermoplastique unitaire ayant deux surfaces principales opposées, le second film polymère thermoplastique unitaire étant à proximité de et solidement lié à la première couche adhésive ; et
une seconde couche adhésive à proximité de et solidement liée au second film polymère thermoplastique unitaire opposé à la première couche adhésive.

3. Couvercle de protection pour un dispositif électronique selon l'une quelconque des revendications 1 ou 2, dans lequel le couvercle de protection est thermoformé.

4. Couvercle de protection pour un dispositif électronique selon l'une quelconque des revendications 1 à 3, dans lequel le composant d) est présent dans la composition durcissable.

5. Couvercle de protection pour un dispositif électronique selon l'une quelconque des revendications 1 à 4, dans lequel le composant a) le composé (méth)acrylate d'uréthane inclut au moins l'un d'un cycle isocyanurate ou d'un groupe biuret.

6. Couvercle de protection pour un dispositif électronique selon l'une quelconque des revendications 1 à 5, dans lequel la composition durcissable comprend des particules d'alpha-alumine ayant un Dv50 allant de 0,1 à 1 micromètre.

7. Couvercle de protection pour un dispositif électronique selon la revendication 6, dans lequel les particules d'alpha-alumine ont un Dv50 allant de 0,2 à 0,3 micromètre.

8. Procédé de fabrication d'un couvercle de protection pour un dispositif électronique, le procédé comprenant :
le thermoformage d'un film composite pour fournir un couvercle de protection comprenant une section plane centrale ayant des première et seconde surfaces principales opposées, dans lequel la section plane centrale est délimitée par au moins deux sections latérales linéaires, et dans lequel le film composite comprend :
un premier film polymère thermoplastique unitaire ayant des première et seconde surfaces principales opposées ;
une couche résistante à l'abrasion à faible énergie de surface agencée sur la première surface principale du premier film polymère thermoplastique unitaire, dans lequel la couche résistante à l'abrasion à faible énergie de surface comprend une composition durcissable au moins partiellement durcie, la composition durcissable comprenant les composants :
a) 70 à 95 pour cent en poids d'un composé (méth)acrylate d'uréthane ayant une fonctionnalité (méth)acrylate moyenne de 3 à 9, en fonction du poids total des composants a) à d) ;
b) 2 à 20 pour cent en poids de monomère (méth)acrylate ayant une fonctionnalité (méth)acrylate de 1 à 2, en fonction du poids total des composants a) à d), dans lequel le monomère (méth)acrylate n'est pas un composé (méth)acrylate d'uréthane ;
c) 0,5 à 2 pour cent en poids de (méth)acrylate de silicone, en fonction du poids total des composants a) à d) ; et
d) une quantité efficace facultative d'un photoinitiateur ; et
une première couche adhésive à proximité de et solidement liée à la seconde surface principale du premier film polymère thermoplastique unitaire,
dans lequel les au moins deux sections latérales linéaires s'étendent hors du plan par rapport à la section plane centrale pour définir des surfaces interne et externe du couvercle de protection, et dans lequel la couche résistante à l'abrasion à faible énergie de surface est agencée sur au moins une partie de la surface externe.

9. Procédé selon la revendication 8, dans lequel le film composite comprend en outre une protection détachable fixée de manière détachable à la première couche adhésive.

10. Procédé selon la revendication 8, dans lequel le film composite comprend en outre :
un second film polymère thermoplastique unitaire ayant deux surfaces principales opposées, le second film polymère thermoplastique unitaire étant à proximité de et solidement lié à la première couche adhésive ; et
une seconde couche adhésive à proximité de et solidement liée au second film polymère thermoplastique unitaire opposé à la première couche adhésive.

11. Procédé selon la revendication 10, dans lequel le composant d) est présent dans la composition durcissable.

12. Procédé selon la revendication 11, dans lequel le composant d) comprend un photoinitiateur de radicaux libres.

13. Procédé selon l'une quelconque des revendications 10 à 12, dans lequel la composition durcissable comprend des particules d'alpha-alumine ayant un Dv50 allant de 0,1 à 1 micromètre.

14. Procédé selon la revendication 13, dans lequel les particules d'alpha-alumine ont un Dv50 allant de 0,2 à 0,3 micromètre.

15. Procédé selon la revendication 13 ou 14, dans lequel la composition durcissable au moins partiellement durcie comprend de 0,15 à 9 pour cent en poids des particules d'alpha-alumine.
